# EUROPEAN PATENT APPLICATION

(11) **EP 4 470 976 A1**
(43) Date of publication of application: **04.12.2024**
(21) Application number: 22924161.7
(22) Date of filing: 21.12.2022
(51) Int. Cl.: C02F 1/42, B01J 49/08, B01J 49/53, B01J 49/57, B01J 49/85, C02F 1/461, C02F 1/52

(54) **WATER SOFTENING DEVICE**

(30) Priority: 28.01.2022 JP 2022011393
(71) Applicant: Panasonic Intellectual Property Management Co., Ltd., Kadoma-shi, Osaka 571-0057 (JP)
(72) Inventor: LU Yujun, Kadoma-shi, Osaka 571-0057 (JP); MURASE Hiroki, Kadoma-shi, Osaka 571-0057 (JP)
(74) Representative: Grünecker Patent- und Rechtsanwälte PartG mbB
(86) International application number: PCT/JP2022/047042
(87) International publication number: WO 2023/145312

(57) **Abstract**

Water softening device (1) of the present disclosure includes water softening tank (3), neutralization tank (4), electrolytic tank (12), water pump (19), current value detector (18), and controller (17) that controls a regeneration treatment. In the regeneration treatment, controller (17) continues the regeneration treatment when a current value of water pump (19) detected by current value detector (18) is more than or equal to a predetermined value, and stops the regeneration treatment and shifts to a hardness component discharge treatment of discharging a hardness component in the water softening device to the outside of the water softening device when the current value of water pump (19) detected by current value detector (18) is less than the predetermined value.

## Description

### TECHNICAL FIELD

The present disclosure relates to a water softening device that generates neutral soft water from raw water including a hardness component.

### BACKGROUND ART

In a conventional water softening device using a weakly acidic cation exchange resin, as a method of regenerating a cation exchange resin without using salt, a method of regenerating a cation exchange resin with acidic electrolyzed water generated by electrolysis is known (See, for example, PTL 1). The weakly acidic cation exchange resin has a proton at the terminal of the functional group, and softens raw water by exchanging hardness components (for example, calcium ions and magnesium ions) in raw water with hydrogen ions. The raw water softened with the weakly acidic cation exchange resin includes hydrogen ions and becomes acidic. The hydrogen ions in the soft water are adsorbed to a weakly basic anion exchange resin provided at the subsequent stage of the weakly acidic cation exchange resin, whereby the softened raw water is neutralized. As a method for regenerating the weakly basic anion exchange resin, a method for regenerating a weakly basic anion exchange resin with alkaline electrolyzed water generated by electrolysis is known (see, for example, PTL 2).

### Citation List

### Patent Literature

PTL 1: Unexamined Japanese Patent Publication No. 2011-30973
PTL 2: Unexamined Japanese Patent Publication No. 2010-142674

### SUMMARY OF THE INVENTION

In such a water softening device, as the regeneration treatments of the weakly acidic cation exchange resin and the weakly basic anion exchange resin proceed, the hardness of the acidic electrolyzed water and alkaline electrolyzed water increases due to the hardness component (for example, calcium ions and magnesium ions) released from the weakly acidic cation exchange resin. A precipitate is generated by the reaction between the released hardness component and the alkaline electrolyzed water. When the generated precipitate flows into the neutralization tank and the water softening treatment is resumed in a state where the precipitate is accumulated in the neutralization tank, there is a problem that the water softening performance deteriorates. Thus, as a countermeasure, the inventors have found that it is effective to provide a separation unit that separates the precipitate. However, precipitates gradually accumulate in the separation unit during the regeneration treatment. Thus, it is necessary to reduce the amount of the hardness component in the device at an appropriate timing in order to prevent clogging of the separation unit due to the precipitates.

An object of the present disclosure is to provide a water softening device capable of discharging a hardness component in the device at an appropriate timing and shortening a time required for a regeneration treatment.

A water softening device according to the present disclosure includes a water softening tank, a neutralization tank, an electrolytic tank, a water pump, a current value detector, and a controller. The water softening tank softens raw water including a hardness component with a weakly acidic cation exchange resin to produce soft water. The neutralization tank neutralizes the pH of the soft water that has been produced by the water softening tank with a weakly basic anion exchange resin. The electrolytic tank produces acidic electrolyzed water that regenerates the weakly acidic cation exchange resin in the water softening tank and alkaline electrolyzed water that regenerates the weakly basic anion exchange resin in the neutralization tank. The water pump supplies the alkaline electrolyzed water from the electrolytic tank to the neutralization tank. The current value detector detects a current value at the time of the operation of the water pump. The controller continues the regeneration treatment when the current value of the water pump detected by the current value detector is more than or equal to a predetermined value at the time of the regeneration treatment. When the current value of the water pump detected by the current value detector is less than the predetermined value at the time of the regeneration treatment, the controller stops the regeneration treatment and shifts to a hardness component discharge treatment of discharging the hardness component in the water softening device to the outside of the water softening device.

According to the present disclosure, it is possible to provide a water softening device capable of discharging a hardness component in the device at an appropriate timing and shortening the time required for a regeneration treatment of the water softening device.

### BRIEF DESCRIPTION OF THE DRAWINGS

Fig. 1 is a conceptual diagram illustrating a configuration of a water softening device according to a first exemplary embodiment of the present disclosure.
Fig. 2 is a configuration diagram illustrating a circulation flow path of the water softening device according to the first exemplary embodiment of the present disclosure.
Fig. 3 is a configuration diagram illustrating a raw water separation unit washing flow path of the water softening device according to the first exemplary embodiment of the present disclosure.
Fig. 4 is a configuration diagram illustrating a regenerated water replacement flow path of the water softening device according to the first exemplary embodiment of the present disclosure.
Fig. 5 is a diagram illustrating a state at the time of the operation of the water softening device according to the first exemplary embodiment of the present disclosure.
Fig. 6 is a diagram illustrating a performance curve of a water pump of the water softening device according to the first to third exemplary embodiments of the present disclosure.
Fig. 7 is a conceptual diagram illustrating a configuration of a water softening device according to a second exemplary embodiment of the present disclosure.
Fig. 8 is a configuration diagram illustrating an acidic separation unit washing flow path of the water softening device according to the second exemplary embodiment of the present disclosure.
Fig. 9 is a configuration diagram illustrating a regenerated water replacement flow path of the water softening device according to the second exemplary embodiment of the present disclosure.
Fig. 10 is a diagram illustrating a state at the time of the operation of the water softening device according to the second exemplary embodiment of the present disclosure.
Fig. 11 is a conceptual diagram illustrating a configuration and a hardness component discharge flow path of a water softening device according to a third exemplary embodiment of the present disclosure.
Fig. 12 is a diagram illustrating a state at the time of the operation of the water softening device according to the third exemplary embodiment of the present disclosure.

### DESCRIPTION OF EMBODIMENT

A water softening device according to the present disclosure includes a water softening tank, a neutralization tank, an electrolytic tank, a water pump, a current value detector, and a controller. The water softening tank softens raw water including a hardness component with a weakly acidic cation exchange resin to produce soft water. The neutralization tank neutralizes the pH of the soft water that has been produced by the water softening tank with a weakly basic anion exchange resin. The electrolytic tank produces acidic electrolyzed water that regenerates the weakly acidic cation exchange resin in the water softening tank and alkaline electrolyzed water that regenerates the weakly basic anion exchange resin in the neutralization tank. The water pump supplies the alkaline electrolyzed water from the electrolytic tank to the neutralization tank. The current value detector detects a current value at the time of the operation of the water pump. The controller continues the regeneration treatment when the current value of the water pump detected by the current value detector is more than or equal to a predetermined value at the time of the regeneration treatment. When the current value of the water pump detected by the current value detector is less than the predetermined value at the time of the regeneration treatment, the controller stops the regeneration treatment and shifts to a hardness component discharge treatment of discharging the hardness component in the water softening device to the outside of the water softening device.

Such a configuration makes it possible to detect the flow rate of the water pump and grasp the operation status of the regeneration treatment. When the current value of the water pump falls below the predetermined value, the treatment shifts to the hardness component discharge treatment, and thus the treatment can be switched to the hardness component discharge treatment at an appropriate timing.

The water softening device according to the present disclosure may further include a separation unit. The separation unit may be provided in a flow path that communicates the electrolytic tank and the neutralization tank, and it may separate a precipitate generated from a hardness component included in the alkaline electrolyzed water introduced into the electrolytic tank. As the hardness component discharge treatment, the controller may perform a raw water separation unit washing treatment of allowing raw water to flow into the separation unit from the downstream side of the separation unit.

This configuration makes it possible to perform backwashing of the separation unit with raw water and to discharge the precipitate including the hardness component precipitated in the separation unit to the outside of the device. Thus, the pressure loss of the separation unit can be reduced, and a sufficient amount of alkaline electrolyzed water can be supplied to the neutralization tank. Therefore, it is possible to provide a water softening device capable of performing a regeneration treatment without delay.

In the water softening device according to the present disclosure, the controller may perform, as the hardness component discharge treatment, an acidic separation unit washing treatment of allowing raw water to flow through the water softening tank to generate acidic soft water and allowing the acidic soft water to flow into the separation unit from the downstream side of the separation unit.

This configuration makes it possible to perform backwashing of the separation unit using the acidic soft water having flowed through the water softening tank and to dissolve the precipitate including the hardness component precipitated in the separation unit. Therefore, the efficiency of the hardness component discharge treatment can be improved, and the hardness component discharge treatment can end in a shorter period of time.

In the water softening device according to the present disclosure, after the raw water separation unit washing treatment, the controller may shift to a regenerated water replacement treatment of replacing the water in the circulation flow path (regeneration path) formed at the time of the regeneration treatment with raw water. This makes it possible to replace the electrolyzed water including a large amount of hardness components released from the weakly acidic cation exchange resin with raw water. Therefore, the amount of hardness components in the path of the regeneration treatment can be reduced, and thus it is possible to provide a water softening device capable of performing the regeneration treatment of the ion exchange resin without delay and shortening the time required for the regeneration treatment of the water softening device.

In the water softening device according to the present disclosure, as the hardness component discharge treatment, the controller may execute, in parallel, allowing raw water to flow through the water softening tank to generate acidic soft water and allowing the acidic soft water to flow in from the downstream side of the separation unit (acidic separation unit washing treatment), and replacing, with regard to the water in the regeneration path, the electrolyzed water including a large amount of hardness components released from the weakly acidic cation exchange resin with raw water (regenerated water replacement treatment).

This makes it possible to further improve the efficiency of the regeneration treatment and the hardness component discharge treatment of the water softening device and to shift to the water softening treatment in a shorter period of time.

Hereinafter, exemplary embodiments of the present disclosure will be described with reference to the drawings. The following exemplary embodiments are merely examples of exemplary embodiments of the present disclosure, and are not intended to limit the technical scope of the present disclosure in any way. Furthermore, the drawings explained in the exemplary embodiments are schematic representations, and the ratios of the sizes and the thicknesses of the elements in each of the drawings do not necessarily reflect the actual dimensional ratios.

### (First exemplary embodiment)

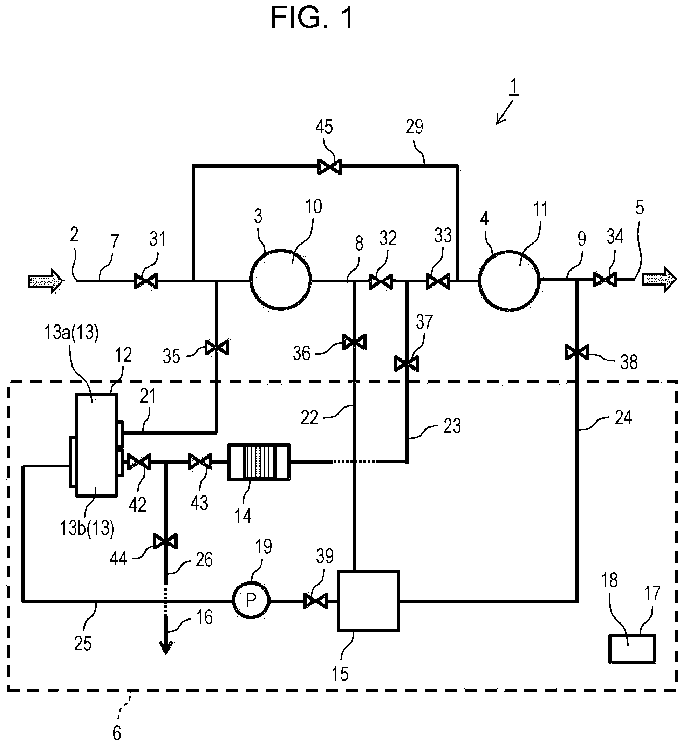

With reference to Fig. 1, water softening device 1 according to a first exemplary embodiment of the present disclosure will be described. Fig. 1 is a conceptual diagram illustrating a configuration of water softening device 1 according to the first exemplary embodiment of the present disclosure. Fig. 1 conceptually illustrates each element of water softening device 1.

### (Overall configuration)

Water softening device 1 is a device that generates neutral soft water from raw water including a hardness component supplied from the outside. The raw water is water (water to be treated) introduced into the device from inlet port 2, and is, for example, city water or well water. The raw water includes a hardness component (e.g., calcium or magnesium ions).

Specifically, as illustrated in Fig. 1, water softening device 1 includes inlet port 2, water softening tank 3, neutralization tank 4, water intake port 5, and regeneration device 6. Water softening device 1 includes drainage port 16, controller 17, and a plurality of on-off valves (on-off valve 31 to on-off valve 39, and on-off valve 42 to on-off valve 45).

Inlet port 2 is connected to city water. Inlet port 2 is an opening that introduces city water into water softening device 1.

Water intake port 5 is an opening that supplies the water that has circulated in water softening device 1 and subjected to a water softening treatment to the outside of the device. In water softening device 1, the water after the water softening treatment can be taken out from water intake port 5 because of the pressure of the raw water flowing in from inlet port 2.

The path from inlet port 2 to water intake port 5 is connected by flow path 7, flow path 8, and flow path 9.

Flow path 7 is a flow path connecting from inlet port 2 to water softening tank 3. That is, flow path 7 is a flow path that guides raw water including a hardness component from inlet port 2 to water softening tank 3.

Flow path 8 is a flow path connecting from water softening tank 3 to neutralization tank 4. That is, flow path 8 is a flow path that guides the acidic soft water softened in water softening tank 3 to neutralization tank 4.

Flow path 9 is a flow path connecting from neutralization tank 4 to water intake port 5. That is, flow path 9 is a flow path that guides the soft water neutralized by neutralization tank 4 to water intake port 5.

In summary, in water softening device 1, in the water softening treatment, city water supplied from the outside flows through inlet port 2, flow path 7, water softening tank 3, flow path 8, neutralization tank 4, flow path 9, and water intake port 5 in this order, and is discharged as neutral soft water.

### (Water softening tank)

Water softening tank 3 softens raw water including a hardness component through the action of weakly acidic cation exchange resin 10. That is, it can also be said that water softening tank 3 generates soft water by softening raw water including a hardness component. More specifically, water softening tank 3 includes weakly acidic cation exchange resin 10 having a hydrogen ion at the terminal of a functional group. Water softening tank 3 exchanges cations (calcium ion and magnesium ion), which are hardness components included in flowing water (raw water), with hydrogen ions. Thus, the hardness of the raw water introduced into water softening tank 3 decreases, and the raw water can be softened.

Water softening tank 3 is filled with weakly acidic cation exchange resin 10. Weakly acidic cation exchange resin 10 is an ion exchange resin having a hydrogen ion at the terminal of the functional group. Weakly acidic cation exchange resin 10 adsorbs cations (calcium ion and magnesium ion), which are hardness components included in the raw water to be passed, and releases hydrogen ions.

Weakly acidic cation exchange resin 10 is not particularly limited, and ones for general purposes can be used. Examples thereof include a resin having a carboxyl group (-COOH) as an exchange group. A resin in which a hydrogen ion (H⁺) as a counter ion of a carboxyl group is a cation such as a metal ion or an ammonium ion (NH4⁺) may also be used.

Since the terminal of the functional group of weakly acidic cation exchange resin 10 is a hydrogen ion, weakly acidic cation exchange resin 10 can be regenerated using acidic electrolyzed water in the regeneration treatment described later. At the time of the regeneration treatment, cations, which are hardness components taken in at the time of the water softening treatment, are released from weakly acidic cation exchange resin 10.

### (Neutralization tank)

Neutralization tank 4 neutralizes the pH (hydrogen ion concentration index) of soft water (acidified soft water) including hydrogen ions coming out of water softening tank 3 through the action of weakly basic anion exchange resin 11 to obtain neutral water (neutral soft water). More specifically, neutralization tank 4 is provided with weakly basic anion exchange resin 11, and it adsorbs hydrogen ions included in soft water from water softening tank 3 together with anions (negative ions). Thus, the pH of the soft water is increased by neutralization tank 4, and the acidified soft water becomes neutral soft water.

Neutralization tank 4 is filled with weakly basic anion exchange resin 11. Weakly basic anion exchange resin 11 is an ion exchange resin having at least one type of amine among a primary amine, a secondary amine, and a tertiary amine as a functional group. Weakly basic anion exchange resin 11 adsorbs hydrogen ions released from water softening tank 3 together with anions (negative ions).

Weakly basic anion exchange resin 11 can be regenerated using alkaline electrolyzed water in the regeneration treatment described later. Weakly basic anion exchange resin 11 is not particularly limited, and ones for general purposes can be used. Examples thereof include a resin in free-base ion form.

### (Regeneration device)

Regeneration device 6 is a device that regenerates weakly acidic cation exchange resin 10 in water softening tank 3 and regenerates weakly basic anion exchange resin 11 in neutralization tank 4. Specifically, regeneration device 6 includes electrolytic tank 12, separation unit 14, water storage tank 15, and water pump 19. In regeneration device 6, first supply flow path 21, first collection flow path 22, bypass flow path 29, second supply flow path 23, and second collection flow path 24 are connected to flow path 7, flow path 8, and flow path 9 from inlet port 2 to water intake port 5, respectively. Details of each flow path will be described later.

### (Electrolytic tank)

Electrolytic tank 12 generates acidic electrolyzed water and alkaline electrolyzed water by electrolyzing the water (water supplied from water storage tank 15) that has entered using a pair of electrodes 13 (electrode 13a and electrode 13b) provided inside, and discharges the generated water. More specifically, in electrode 13a serving as an anode at the time of electrolysis, hydrogen ions are generated through electrolysis, and acidic electrolyzed water is generated. In electrode 13b serving as a cathode during electrolysis, hydroxide ions are generated through electrolysis, and alkaline electrolyzed water is generated. Then, electrolytic tank 12 supplies the acidic electrolyzed water to water softening tank 3 through first supply flow path 21, and supplies the alkaline electrolyzed water to neutralization tank 4 through second supply flow path 23. Although details will be described later, the acidic electrolyzed water generated by electrolytic tank 12 is used for regenerating weakly acidic cation exchange resin 10 in water softening tank 3. The alkaline electrolyzed water generated by electrolytic tank 12 is used for regenerating weakly basic anion exchange resin 11 in neutralization tank 4. Electrolytic tank 12 is configured such that an energization state to the pair of electrodes 13 can be controlled by controller 17 described later.

### (Water storage tank)

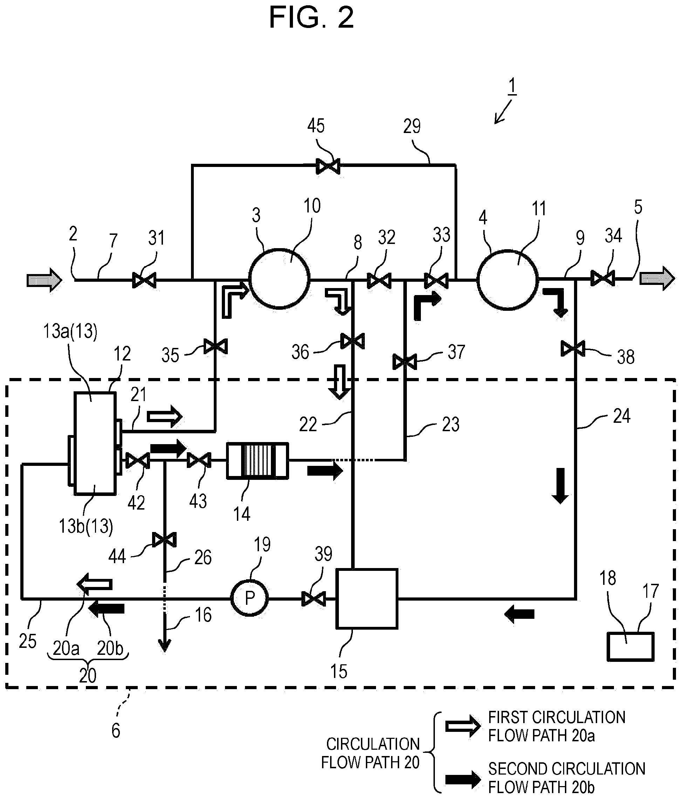

Water storage tank 15 secures and stores water to be circulated in circulation flow path 20 (see Fig. 2) when weakly acidic cation exchange resin 10 and weakly basic anion exchange resin 11 are regenerated. Water storage tank 15 mixes acidic electrolyzed water including a hardness component having flowed through water softening tank 3 and alkaline electrolyzed water including anions having flowed through neutralization tank 4, and supplies the mixed water to electrolytic tank 12.

Then, the water having flowed through water storage tank 15 passes through electrolytic tank 12, is electrolyzed in electrolytic tank 12, and becomes acidic electrolyzed water and alkaline electrolyzed water, which are supplied to water softening tank 3 and neutralization tank 4, respectively. Then, the acidic electrolyzed water and the alkaline electrolyzed water are reused in water softening tank 3 and neutralization tank 4, respectively, and then the acidic electrolyzed water and the alkaline electrolyzed water are supplied (collected) to water storage tank 15 again. Thus, the acidic electrolyzed water and the alkaline electrolyzed water used for the regeneration of weakly acidic cation exchange resin 10 and the regeneration of weakly basic anion exchange resin 11 can be reused.

### (Water pump)

Water pump 19 is a device that circulates water through circulation flow path 20 (see Fig. 2) at the time of the regeneration treatment by regeneration device 6. Water pump 19 is provided in water supply flow path 25 that communicatively connects between water storage tank 15 and electrolytic tank 12. Water pump 19 is preferably disposed on the upstream side of electrolytic tank 12 and on the downstream side of water storage tank 15. This disposition is adopted because one water pump 19 can easily circulate water to first circulation flow path 20a and second circulation flow path 20b. Water pump 19 is connected to controller 17 described later so as to be able to communicate therewith in a wireless or wired manner. A current value of water pump 19 is detected by current value detector 18 in controller 17 described later.

### (Separation unit)

Separation unit 14 is provided in second supply flow path 23 that communicatively connects electrolytic tank 12 and neutralization tank 4.

Separation unit 14 separates the precipitate included in the alkaline electrolyzed water sent from electrolytic tank 12. The precipitate is a reaction product generated when a hardness component, which is a cation released from water softening tank 3 at the time of the regeneration treatment of water softening tank 3, reacts with alkaline electrolyzed water in electrolytic tank 12. More specifically, while the electrolysis of water is being performed in electrolytic tank 12, the hardness component (for example, calcium ions and magnesium ions) released from water softening tank 3 at the time of the regeneration treatment moves to the cathode (electrode 13b) side. Since alkaline electrolyzed water is generated on the cathode side, the hardness component and the alkaline electrolyzed water react with each other to form a precipitate. For example, when the hardness component is calcium ions, a reaction in which calcium carbonate is generated or calcium hydroxide is generated occurs by mixing the calcium ions with the alkaline electrolyzed water. The precipitates derived from the hardness component are separated as precipitates by separation unit 14 provided in second supply flow path 23. Separating the precipitates derived from the hardness components with separation unit 14 makes it possible to prevent the precipitates from flowing into neutralization tank 4 and accumulating. Thus, when the water softening treatment is resumed after the end of the regeneration treatment, it is possible to suppress that the precipitate accumulated in neutralization tank 4 reacts with hydrogen ions released from water softening tank 3 to form a hardness component and hardness of the soft water sent from neutralization tank 4 is increased. In addition, at the time of the regeneration treatment, the alkaline electrolyzed water from which the precipitate derived from the hardness component is separated by separation unit 14 flows through neutralization tank 4, is mixed with the acidic electrolyzed water, then electrolyzed again in electrolytic tank 12, and is provided for regeneration of weakly acidic cation exchange resin 10 and regeneration of weakly basic anion exchange resin 11 as the acidic electrolyzed water and the alkaline electrolyzed water, respectively. At this time, the hardness component included in the acidic electrolyzed water is reduced as compared with the case of city water or the case where separation unit 14 is not provided. That is, since the hardness of the acidic electrolyzed water is reduced by separating the precipitate by separation unit 14, the hardness component flowing into water softening tank 3 can be reduced, and the reduction in regeneration efficiency of weakly acidic cation exchange resin 10 can be suppressed.

The expression "the hardness component reacts" includes not only a state where all the hardness components react but also a state where components that do not react or components that do not exceed the solubility product are included.

The form of separation unit 14 is not limited as long as the precipitate generated by the reaction between the hardness component and the alkaline electrolyzed water can be separated. For example, a form using a cartridge type filter, a filtration layer using a granular filter medium, a cyclone type solid-liquid separator, a hollow fiber membrane, or the like can be mentioned.

As a means generally used as a form of separation unit 14, a cartridge type filter can be exemplified. As the cartridge type filter, a deep filtration type such as a yarn winding filter, a surface filtration type such as a pleated filter and a membrane filter, or a combination thereof can be used.

The yarn winding filter corresponds to a particle diameter of 1 micrometer to 150 micrometers, and is mainly used as a pre-filter. There are pleated filters and membrane filters corresponding to a wide particle diameter of about 0.03 micrometers to 100 micrometers. In particular, in the implementation of the present disclosure, it is preferable to use one having an accuracy of about 0.5 micrometers to 1.5 micrometers for capturing the hardness component precipitated in the regeneration treatment described later. Since alkaline electrolyzed water flows in separation unit 14 in the regeneration treatment described later and acidic electrolyzed water flows in separation unit 14 in the washing treatment, the material of the cartridge-type filter is preferably a material (for example, polypropylene) having high corrosion resistance against acid and alkali.

The granular filter medium using for the filtration layer is intended to capture and remove hardness components, but it is also possible to remove particles having a surface potential to be adsorbed to the granular filter medium, particles having a particle diameter of about 1 micrometer to 10 micrometers, or chromaticity depending on the existence state of ions and the like in raw water. As the granular filter medium, a filter material suitable for an object to be removed, such as filtration sand, a pellet fiber filter material, or the like, can be used. The material of the granular filter medium may be, for example, a material having hardness that is likely to settle down in water and is less likely to be deformed by pressure, such as sand, anthracite, garnet, ceramics, granular activated carbon, iron oxyhydroxide, or manganese sand. The particle diameter may be, for example, 0.3 millimeters to 5.0 millimeters, and the equivalent coefficient may be 1.2 to 2.0.

The multilayer filtration method in which a plurality of types of filter materials having different specific gravities are mixed and used is a method in which particles having different sizes are layered in order from smallest particles to largest from the bottom as a layer for filtration. In the multilayer filtration method, particles having a large specific gravity and a small size, and particles having a small specific gravity and a large size are usually mixed to form a multilayer structure. The multilayer filtration method is preferable because there are advantages such as high filtration efficiency per unit volume and low head loss as compared with a case where a single kind of filter material is used. As a granular filter medium, for example, 0.3 millimeters of garnet, 0.6 millimeters of sand, and 1.0 millimeters of anthracite are mixed at 2 : 1 : 1 and used, and it is preferable to adjust the mixing ratio or the particle diameters according to the particle characteristics of the turbidity.

### (On-off valve and selection valve)

The plurality of on-off valves (on-off valve 31 to on-off valve 39, and on-off valve 42 to on-off valve 45) are provided at predetermined positions of the plurality of flow paths, and they can switch between an "open" state and a "closed" state in each flow path. Each of the plurality of on-off valves is connected to controller 17 to be described later so as to be able to communicate with controller 17 in a wireless or wired manner.

### (Drainage port)

Drainage port 16 is an opening that is connected to drainage flow path 26 and discharges the water flowing in water softening device 1 to the outside of the device.

Drainage port 16 discharges the raw water that has flowed through separation unit 14 and used for backwashing of the separation unit 14 to the outside of the device at the time of raw water separation unit washing treatment to be described later. More specifically, at the time of the raw water separation unit washing treatment to be described later, drainage port 16 discharges the water having flowed through flow path 7, bypass flow path 29, on-off valve 33, flow path 8, on-off valve 37, second supply flow path 23, separation unit 14, on-off valve 43, on-off valve 44, and drainage flow path 26 to the outside of the device together with the precipitate deposited in the separation unit 14.

At the time of the regenerated water replacement treatment to be described later, drainage port 16 discharges the water having flowed through neutralization tank 4, second collection flow path 24, water storage tank 15, water pump 19, and electrolytic tank 12 to the outside of the device.

### (Controller)

Controller 17 controls the water softening treatments for softening raw water including a hardness component. Controller 17 also controls the regeneration treatment of weakly acidic cation exchange resin 10 in water softening tank 3 and weakly basic anion exchange resin 11 in neutralization tank 4. Controller 17 also controls the raw water separation unit washing treatment of performing backwashing of separation unit 14 with raw water. Controller 17 also controls the regenerated water replacement treatment for discharging the electrolyzed water in circulation flow path 20 formed at the time of the regeneration treatment to the outside of the device. Further, controller 17 controls switching of the water softening treatment, the regeneration treatment, the raw water separation unit washing treatment, and the regenerated water replacement treatment of water softening device 1. Controller 17 includes current value detector 18.

Current value detector 18 detects a current value of water pump 19 during the regeneration treatment. Information on the detected current value is transmitted to controller 17 and used as information for determining switching of each treatment of water softening device 1.

Controller 17 includes a computer system including a processor and a memory. The computer system functions as the controller with the processor executing a program stored in the memory. The program to be executed by the processor is assumed here to be recorded in advance in the memory of the computer system, but it may be provided in a manner being recorded in a non-transitory recording medium such as a memory card, or provided through a telecommunication line such as the Internet.

When switching among the water softening treatment, the regeneration treatment, the raw water separation unit washing treatment, and the regenerated water replacement treatment is controlled, controller 17 controls operations of electrodes 13, water pump 19, and the plurality of on-off valves (on-off valve 31 to on-off valve 39, and on-off valve 42 to on-off valve 45) to execute switching and respective treatments.

### (Flow path)

### (Circulation flow path)

Next, circulation flow path 20 formed at the time of the regeneration treatment of water softening device 1 will be described with reference to Fig. 2. Fig. 2 is a configuration diagram illustrating circulation flow path 20 of water softening device 1.

As illustrated in Fig. 2, in water softening device 1, electrolytic tank 12 and water storage tank 15 constituting regeneration device 6 are communicably connected by water supply flow path 25. Electrolytic tank 12 and water storage tank 15 are communicably connected to flow path 7, flow path 8, and flow path 9 from inlet port 2 to water intake port 5 by first supply flow path 21, first collection flow path 22, second supply flow path 23, and second collection flow path 24, respectively. In water softening device 1, circulation flow path 20 is configured by a combination of a plurality of flow paths. Flow path 8 is connected to first collection flow path 22, second supply flow path 23, and bypass flow path 29 in this order from the upstream side.

Circulation flow path 20 includes first circulation flow path 20a through which water sent from water storage tank 15 by water pump 19 flows through water softening tank 3, and second circulation flow path 20b through which water sent from water storage tank 15 by water pump 19 flows through neutralization tank 4.

As illustrated in Fig. 2 (white arrow), first circulation flow path 20a is a flow path through which water sent from water storage tank 15 by water pump 19 flows through electrolytic tank 12 and water softening tank 3, and returns to water storage tank 15 to circulate. More specifically, first circulation flow path 20a is a flow path through which water sent from water storage tank 15 by water pump 19 circulates through water supply flow path 25, electrolytic tank 12, first supply flow path 21, on-off valve 35, water softening tank 3, first collection flow path 22, on-off valve 36, and water storage tank 15 in this order.

As illustrated in Fig. 2 (black arrow), second circulation flow path 20b is a flow path through which water sent from water storage tank 15 by water pump 19 circulates through electrolytic tank 12 and neutralization tank 4 and returns to water storage tank 15 to circulate. More specifically, second circulation flow path 20b is a flow path through which water sent from water storage tank 15 by water pump 19 circulates through water supply flow path 25, electrolytic tank 12, second supply flow path 23, on-off valve 42, on-off valve 43, separation unit 14, on-off valve 37, on-off valve 33, neutralization tank 4, second collection flow path 24, on-off valve 38, and water storage tank 15 in this order. First supply flow path 21 is a flow path for supplying acidic electrolyzed water from electrolytic tank 12 to water softening tank 3. First collection flow path 22 is a flow path for collecting water including a hardness component that has passed through water softening tank 3 into water storage tank 15. Second supply flow path 23 is a flow path for supplying alkaline electrolyzed water from electrolytic tank 12 to neutralization tank 4. Second collection flow path 24 is a flow path for collecting water having passed through neutralization tank 4 into water storage tank 15. Bypass flow path 29 is a flow path that supplies raw water to neutralization tank 4 without allowing the raw water to pass through water softening tank 3.

First supply flow path 21 is a flow path for supplying acidic electrolyzed water from electrolytic tank 12 to water softening tank 3, and on-off valve 35 is installed in the flow path. That is, water softening device 1 includes first supply flow path 21 that can draw out the acidic electrolyzed water from electrolytic tank 12 and supply the acidic electrolyzed water to the upstream side of water softening tank 3.

First collection flow path 22 is a flow path for collecting water including a hardness component that has passed through water softening tank 3 into water storage tank 15, and on-off valve 36 is installed in the flow path. That is, water softening device 1 includes first collection flow path 22 that enables the upstream side of water storage tank 15 to be connected to the downstream side of water softening tank 3.

Second supply flow path 23 is a flow path for supplying alkaline electrolyzed water from electrolytic tank 12 to neutralization tank 4 via separation unit 14 at the time of the regeneration treatment described later, and separation unit 14, on-off valve 42, on-off valve 43, and on-off valve 37 are installed in the flow path. That is, water softening device 1 includes second supply flow path 23 capable of separating the precipitate derived from the hardness component included in the alkaline electrolyzed water drawn out from electrolytic tank 12 by separation unit 14 and supplying the alkaline electrolyzed water from which the precipitate has been separated to the upstream side of neutralization tank 4. Second supply flow path 23 is connected to flow path 8 on the downstream side from first collection flow path 22. This is to suppress mixing of the acidic electrolyzed water discharged from water softening tank 3 and the alkaline electrolyzed water delivered from electrolytic tank 12 at the time of the regeneration treatment to be described later. That is, flow path 8 is connected to first collection flow path 22 and second supply flow path 23 in order from the upstream side.

Second collection flow path 24 is a flow path for collecting water having passed through neutralization tank 4 into water storage tank 15, and on-off valve 38 is installed in the flow path. That is, water softening device 1 includes second collection flow path 24 that enables the upstream side of water storage tank 15 to be connected to the downstream side of neutralization tank 4.

Here, to circulate water in circulation flow path 20, on-off valve 31 is installed on the downstream side of inlet port 2 in flow path 7. Closing on-off valve 31 and opening on-off valve 35 forms a state in which first supply flow path 21 is communicably connected to the upstream side of water softening tank 3. This makes it possible to supply the acidic electrolyzed water from electrolytic tank 12 to water softening tank 3.

Flow path 8 is provided with on-off valve 32 at a position on the downstream side of first collection flow path 22 and on the upstream side of second supply flow path 23. Closing on-off valve 32 and opening on-off valve 36 forms a state in which first collection flow path 22 is communicatively connected to the downstream side of water softening tank 3. This makes it possible to collect the water (acidic electrolyzed water including hardness components) having flowed through water softening tank 3 into water storage tank 15 in water softening device 1.

Closing on-off valve 32 and on-off valve 45 and opening on-off valve 33, on-off valve 37, on-off valve 42, and on-off valve 43 forms a state in which second supply flow path 23 is communicably connected to the upstream side of the neutralization tank 4. This makes it possible to circulate the alkaline electrolyzed water from electrolytic tank 12 to separation unit 14 and supply the alkaline electrolyzed water to neutralization tank 4 in water softening device 1.

In flow path 9, on-off valve 34 is installed on the downstream side of neutralization tank 4. Closing on-off valve 34 and opening on-off valve 38 forms a state in which second collection flow path 24 is communicatively connected to the downstream side of neutralization tank 4. This makes it possible to collect the water (alkaline electrolyzed water including anions) that has passed through second collection flow path 24 into water storage tank 15.

Closing on-off valve 34 makes it possible to start the circulation of water to circulation flow path 20. Opening on-off valve 34 makes it possible to stop the circulation of water to circulation flow path 20.

In water supply flow path 25, on-off valve 39 is disposed on the downstream side (a position between water storage tank 15 and water pump 19) of water storage tank 15. Closing on-off valve 39 makes it possible to store water in water storage tank 15. Opening on-off valve 39 makes it possible to supply water to water supply flow path 25.

### (Raw water separation unit washing flow path)

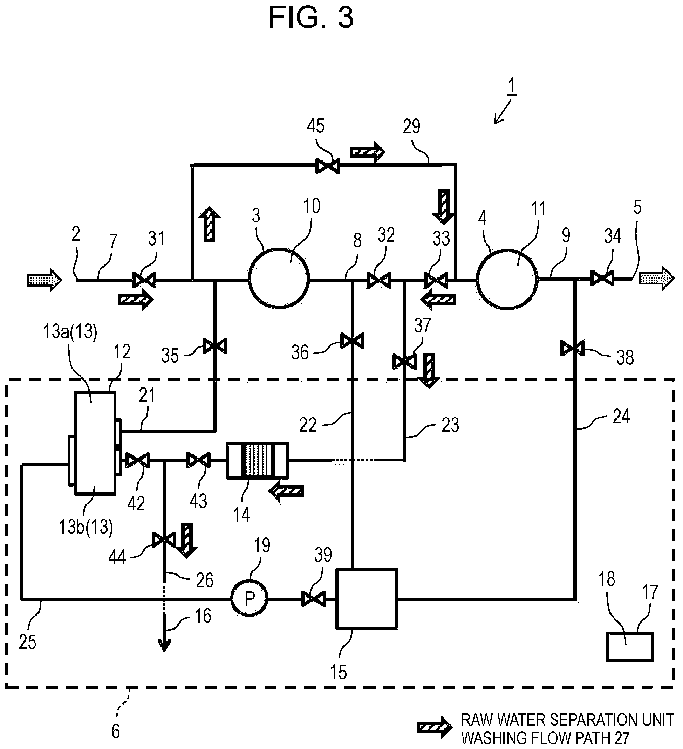

Next, raw water separation unit washing flow path 27 formed at the time of the separation unit washing treatment of water softening device 1 will be described with reference to Fig. 3. Fig. 3 is a configuration diagram illustrating raw water separation unit washing flow path 27 of water softening device 1.

As illustrated in Fig. 3, raw water separation unit washing flow path 27 is configured by flow paths connecting inlet port 2, separation unit 14, and drainage port 16. Raw water separation unit washing flow path 27 is a flow path that supplies raw water to separation unit 14 without allowing the raw water to pass through water softening tank 3. More specifically, raw water separation unit washing flow path 27 is a flow path through which the raw water having flowed in from inlet port 2 flows through bypass flow path 29, separation unit 14, and drainage flow path 26, and is discharged from drainage port 16.

Bypass flow path 29 is a flow path that bypasses water softening tank 3 and connects from flow path 7 to flow path 8. One end of bypass flow path 29 is connected to flow path 7 on the downstream side of on-off valve 31 and on the upstream side of the connection point between first supply flow path 21 and flow path 7. The other end of bypass flow path 29 is connected to flow path 8 on the downstream side of on-off valve 33 and on the upstream side of neutralization tank 4. On-off valve 45 is installed in bypass flow path 29.

That is, the raw water introduced from inlet port 2 flows through flow path 7 and bypass flow path 29, and is supplied to flow path 8. Then, closing on-off valve 32, on-off valve 34, and on-off valve 38 and opening on-off valve 33 and on-off valve 37 forms a state in which the upstream side of separation unit 14 and inlet port 2 are directly and communicatively connected.

Drainage flow path 26 is a flow path that discharges water from the downstream side of separation unit 14 or the cathode side of electrolytic tank 12 to drainage port 16. On-off valve 42 to on-off valve 44 are provided in drainage flow path 26. That is, water softening device 1 can discharge water from the downstream side of separation unit 14 to drainage port 16 by opening on-off valve 43 the on-off valve 44. Water softening device 1 can discharge water from the cathode side of electrolytic tank 12 to drainage port 16 by opening on-off valve 42 and on-off valve 44. In raw water separation unit washing flow path 27, on-off valve 42 is closed, and on-off valve 43 and on-off valve 44 are opened.

That is, as illustrated in Fig. 3 (hatched arrow), raw water separation unit washing flow path 27 is a flow path in which the raw water introduced from inlet port 2 flows through flow path 7, bypass flow path 29, flow path 8, second supply flow path 23, separation unit 14, on-off valve 43, on-off valve 44, and drainage flow path 26 in this order, and is discharged from drainage port 16 to the outside of the device. At the time of the raw water separation unit washing treatment described later, raw water separation unit washing flow path 27 is used.

### (Regenerated water replacement flow path)

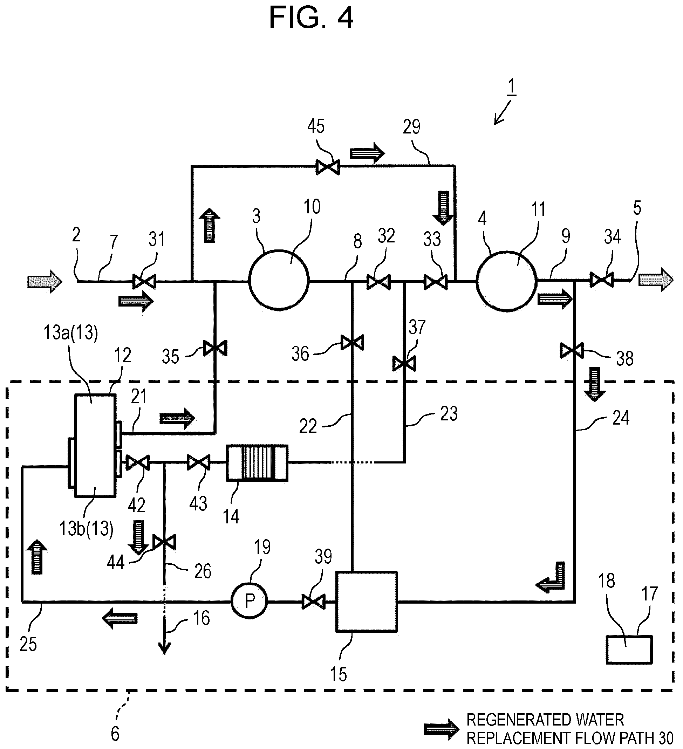

Next, regenerated water replacement flow path 30 formed at the time of the regenerated water replacement treatment of water softening device 1 will be described with reference to Fig. 4. Fig. 4 is a configuration diagram illustrating regenerated water replacement flow path 30 of water softening device 1.

As illustrated in Fig. 4 (arrow with horizontal lines), regenerated water replacement flow path 30 is a flow path through which the water introduced from inlet port 2 flows through neutralization tank 4, water storage tank 15, water pump 19, and electrolytic tank 12, and is a flow path through which the regenerated water remaining in the flow path is replaced by the flowing water. More specifically, regenerated water replacement flow path 30 is a flow path in which the water introduced from inlet port 2 flows through flow path 7 and bypass flow path 29 in this order, passes through neutralization tank 4, then flows through second collection flow path 24, water storage tank 15, water pump 19, electrolytic tank 12, on-off valve 42, on-off valve 44, and drainage flow path 26 in this order, and is discharged from drainage port 16 to the outside of the device. Regenerated water replacement flow path 30 is used at the time of the regenerated water replacement treatment described later.

The above is the configuration of water softening device 1.

Next, the operation of water softening device 1 will be described.

### (Water softening treatment, regeneration treatment, and hardness component discharge treatment)

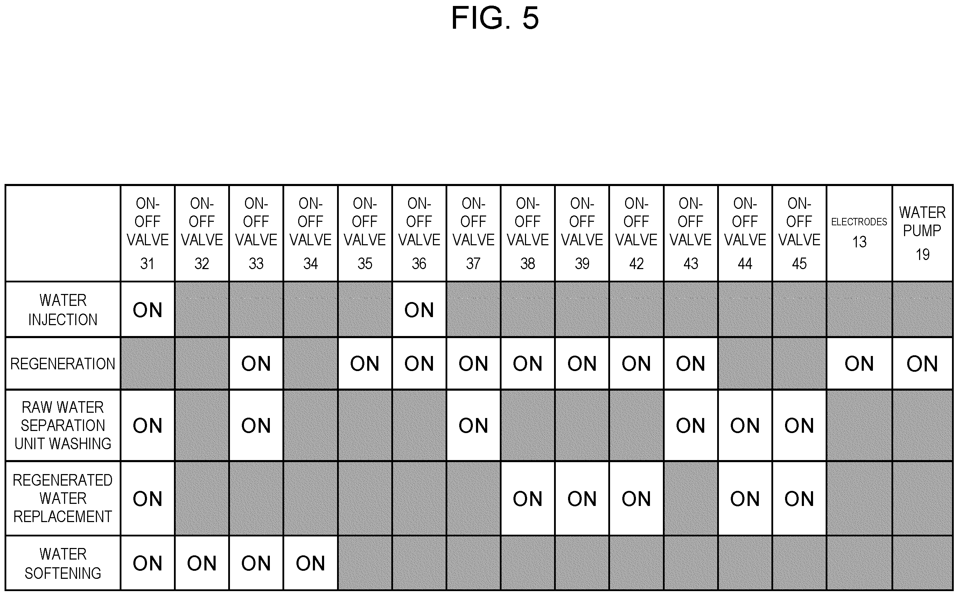

First, the regeneration treatment, the hardness component discharge treatment, and the water softening treatment of water softening device 1 starting from the regeneration treatment will be described with reference to Fig. 5. Fig. 5 is a diagram illustrating a state of water softening device 1 at the time of operation.

In the regeneration treatment, the hardness component discharge treatment, and the water softening treatment, as illustrated in Fig. 5, controller 17 switches on-off valve 31 to on-off valve 39, on-off valve 42 to on-off valve 45, electrodes 13 of electrolytic tank 12, and water pump 19 to control them to be in a predetermined flowing state.

Here, "ON" in Fig. 4 indicates a state in which the corresponding on-off valve is "open", a state in which electrodes 13 are energized, and a state in which water pump 19 is operating. Blanks indicate a state in which the corresponding on-off valve is "closed", a state in which electrodes 13 are not energized, and a state in which water pump 19 is stopped.

### (Regeneration treatment)

First, the operation of water softening device 1 at the time of the regeneration treatment with regeneration device 6 will be sequentially described with reference to the columns of "WATER INJECTION" and "REGENERATION" in Fig. 4.

In water softening device 1, in water softening tank 3 filled with weakly acidic cation exchange resin 10, the cation exchange capacity decreases or disappears as the use is continued. That is, ion exchange cannot be performed after all the hydrogen ions, which are functional groups of the cation exchange resin, are exchanged for calcium ions or magnesium ions, which are hardness components. In such a state, the hardness component starts to be included in the treatment water. Thus, in water softening device 1, it is necessary to perform regeneration treatments of water softening tank 3 and neutralization tank 4 with regeneration device 6.

In water softening device 1, controller 17 specifies a time zone in which the regeneration treatment can be performed once in a predetermined period (for example, one day (24 hours)) and executes the regeneration treatment.

First, as illustrated in Fig. 5, at the time of water injection, on-off valve 31 and on-off valve 36 are opened. This causes water softening device 1 to introduce raw water into water storage tank 15 from inlet port 2 through water softening tank 3 because of the pressure of the raw water. At this time, on-off valve 32 to on-off valve 35, on-off valve 37 to on-off valve 39, and on-off valve 42 to on-off valve 45 are closed. Storing a predetermined amount of water corresponding to the capacity of water softening device 1 in water storage tank 15 makes it possible for regeneration device 6 to secure the amount of water at the time of regeneration.

Next, at the time of regeneration, by setting on-off valve 31, on-off valve 32, on-off valve 34, on-off valve 44, and on-off valve 45 to close and on-off valve 33, on-off valve 35 to on-off valve 39, on-off valve 42 and on-off valve 43 to open, first circulation flow path 20a and second circulation flow path 20b are formed, respectively, as illustrated in Fig. 2. Then, when electrodes 13 of electrolytic tank 12 and water pump 19 are operated, the water stored in water storage tank 15 circulates through each of first circulation flow path 20a and second circulation flow path 20b.

At this time, the acidic electrolyzed water generated in electrolytic tank 12 is sent into water softening tank 3 through first supply flow path 21, and flows through weakly acidic cation exchange resin 10 inside. That is, circulating the acidic electrolyzed water through weakly acidic cation exchange resin 10 causes cations (hardness components) adsorbed to weakly acidic cation exchange resin 10 to undergo an ion exchange reaction with hydrogen ions included in the acidic electrolyzed water. This causes weakly acidic cation exchange resin 10 to be regenerated. Thereafter, the acidic electrolyzed water having flowed through weakly acidic cation exchange resin 10 includes cations and flows into first collection flow path 22. That is, the acidic electrolyzed water including cations that has flowed through weakly acidic cation exchange resin 10 is collected into water storage tank 15 via first collection flow path 22.

On the other hand, the alkaline electrolyzed water generated in electrolytic tank 12 is sent into neutralization tank 4 through second supply flow path 23 and separation unit 14, and flows through weakly basic anion exchange resin 11 inside. That is, circulating the alkaline electrolyzed water through weakly basic anion exchange resin 11 causes anions adsorbed on weakly basic anion exchange resin 11 to undergo an ion exchange reaction with hydroxide ions included in the alkaline electrolyzed water. This causes weakly basic anion exchange resin 11 to be regenerated. Thereafter, the alkaline electrolyzed water having flowed through weakly basic anion exchange resin 11 includes anions and flows into second collection flow path 24. That is, the alkaline electrolyzed water including anions that has flowed through weakly basic anion exchange resin 11 is collected into water storage tank 15 via second collection flow path 24.

In water storage tank 15, acidic electrolyzed water including cations collected from water softening tank 3 and alkaline electrolyzed water including anions collected from neutralization tank 4 are mixed and neutralized.

At this time, mixing the acidic electrolyzed water including cations (hardness components) and the alkaline electrolyzed water including anions causes the hardness components to react with hydroxide ions included in the alkaline electrolyzed water, and a precipitate is generated. However, at least at the initial stage of the regeneration treatment, the amount of hydroxide ions included in the alkaline electrolyzed water flowing from neutralization tank 4 is smaller than the amount of hardness components released from water softening tank 3, and thus precipitates are less likely to be generated. Thus, the hardness components included in the neutralized electrolyzed water are sent to electrolytic tank 12 as they are.

Thereafter, the electrolyzed water mixed in water storage tank 15 passes through electrolytic tank 12 again through water supply flow path 25. Then, the passed water is electrolyzed again in electrolytic tank 12.

As described above, water is electrolyzed in electrolytic tank 12, and a large amount of hydroxide ions are generated through electrolysis near the cathode, and thus a precipitate is likely to be generated. That is, the hardness components (for example, calcium ions and magnesium ions) included in the water supplied from water storage tank 15 move to the cathode side and react with hydroxide ions to become a precipitate. Then, the alkaline electrolyzed water including the precipitate is sent to second supply flow path 23 and flows into separation unit 14.

In separation unit 14, the precipitate included in the alkaline electrolyzed water is separated, and alkaline electrolyzed water (treated water) from which the hardness component has been removed can be obtained. Then, the acidic electrolyzed water electrolyzed again in electrolytic tank 12 and the alkaline electrolyzed water electrolyzed again in electrolytic tank 12 and separated from the precipitate by separation unit 14 are subjected to regeneration of weakly acidic cation exchange resin 10 and regeneration of weakly basic anion exchange resin 11, respectively.

Here, as a problem when separation unit 14 is not provided, there is a point that the precipitate generated by a reaction between the hardness component released from water softening tank 3 and the alkaline electrolyzed water in the electrolytic tank at the time of the regeneration treatment flows into neutralization tank 4 and is accumulated in the neutralization tank. That is, when the water softening treatment is resumed in a state where the precipitate is accumulated in neutralization tank 4, the precipitate reacts with hydrogen ions released from water softening tank 3 to form a hardness component, and thus the water softening performance deteriorates. As a countermeasure of this problem, in the present exemplary embodiment, the precipitate generated in electrolytic tank 12 is separated by separation unit 14, which can prevent the precipitate generated from the hardness component from accumulating in neutralization tank 4.

However, as the regeneration treatment progresses, the precipitate separated by separation unit 14 gradually accumulates in separation unit 14. Then, the pressure loss of separation unit 14 increases. A constant energy is applied to circulation flow path 20 by water pump 19, but as the pressure loss of separation unit 14 increases, the supply flow rate of the alkaline electrolyzed water to be supplied to neutralization tank 4 gradually decreases as the regeneration treatment proceeds, and the regeneration treatment of neutralization tank 4 may become difficult to complete. Thus, a countermeasure needs to be adopted.

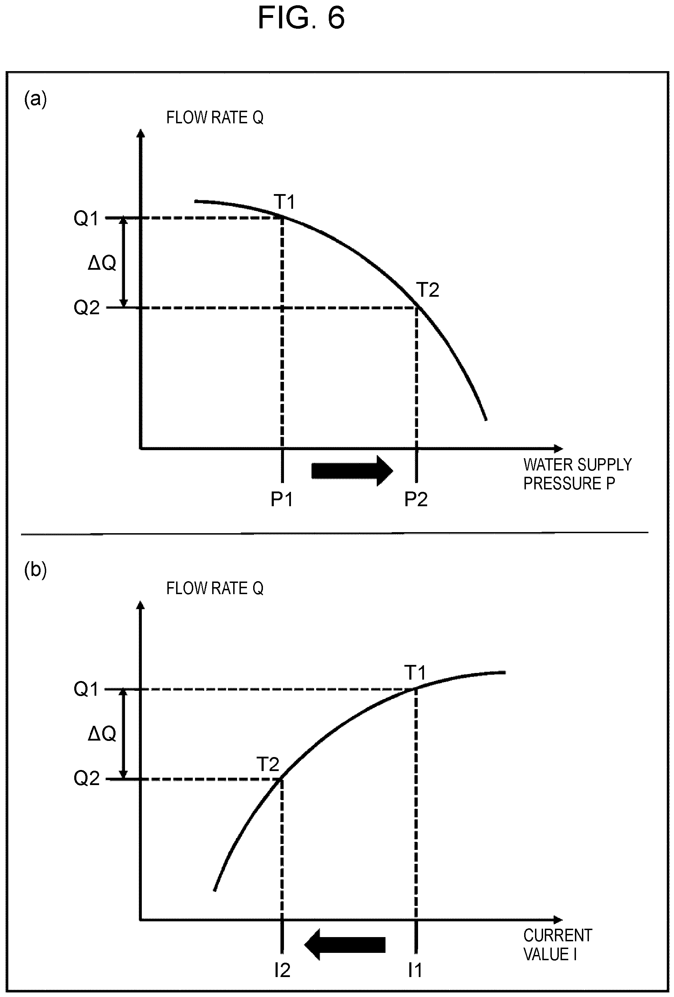

Thus, in the present exemplary embodiment, current value detector 18 detects the current value of water pump 19 while the regeneration treatment of water softening device 1 is in progress, and controller 17 controls the transition from the regeneration treatment to the hardness component discharge treatment according to the detected current value. With reference to Fig. 6, current value detection with current value detector 18 and transition from the regeneration treatment to the hardness component discharge treatment with the controller 17 will be described. Fig. 6 is a diagram illustrating a performance curve of water pump 19 of water softening device 1. (a) of Fig. 6 is a diagram illustrating a relationship between the flow rate and the water supply pressure. (b) of Fig. 6 is a diagram illustrating a relationship between the flow rate and the current value.

As illustrated in (a) of Fig. 6, immediately after the start of the regeneration treatment (T1), no precipitate is accumulated on separation unit 14, and thus water pump 19 supplies electrolyzed water to circulation flow path 20 at first water supply pressure P1. Assuming that the flow rate immediately after separation unit 14 at this time is first flow rate Q1, first flow rate Q1 is stable. Assuming that I1 is the current value of water pump 19 at this time, first current value I1 is stable as illustrated in (b) of Fig. 6. In the regeneration treatment, as the regeneration treatment of weakly acidic cation exchange resin 10 in water softening tank 3 proceeds (T2), the hardness in the acidic electrolyzed water and the alkaline electrolyzed water increases, and precipitates are continuously generated in the alkaline electrolyzed water. Since the generated precipitates are captured by separation unit 14, the precipitates are gradually accumulated on separation unit 14 as the regeneration treatment proceeds. When a part of separation unit 14 is clogged due to the accumulation of the precipitates, the pressure loss of separation unit 14 increases. When the pressure loss of separation unit 14 increases, the pressure of water in circulation flow path 20 sent by water pump 19 increases. Thus, as illustrated in (a) of Fig. 6, the pressure of water pump 19 increases to become second water supply pressure P2. At this time, the flow rate after separation unit 14 decreases to become second flow rate Q2. In addition, since the flow rate decreases, the current value of water pump 19 decreases to be second current value I2 as illustrated in (b) of Fig. 6. That is, a change in the flow rate after separation unit 14 can be grasped by grasping the change in the current value detected by current value detector 18.

The current value detected by current value detector 18 is used to determine the transition from the regeneration treatment to the hardness component discharge treatment by controller 17. When second current value I2 is more than or equal to a predetermined value, controller 17 continues the regeneration treatment. On the other hand, when second current value I2 is less than the predetermined value, controller 17 temporarily stops the regeneration treatment and controls water softening device 1 to shift to the hardness component discharge treatment. As the predetermined value of second current value I2, for example, a current value set based on an evaluation result in an experiment performed in advance may be used as a current value when the flow rate immediately after separation unit 14 decreases to a constant value. For example, when the flow rate at the initial stage of the regeneration treatment is 2 L/min, the predetermined value may be a current value when the flow rate decreases to 0.5 L/min. Detecting the current value of water pump 19 like this makes it possible to grasp a decrease in flow rate of separation unit 14 and to perform the hardness component discharge treatment at an appropriate timing. Thus, blockage of separation unit 14 can be suppressed, and alkaline electrolyzed water can be circulated through second circulation flow path 20b which is a path including separation unit 14 without delay. Therefore, the regeneration treatment of neutralization tank 4 can be smoothly performed.

When shifting to the hardness component discharge treatment, controller 17 stops the operations of electrodes 13 and water pump 19, closes on-off valve 32, on-off valve 34 to on-off valve 36, on-off valve 38, on-off valve 39, and on-off valve 42, and opens on-off valve 31, on-off valve 33, on-off valve 37, and on-off valve 43 to on-off valve 45. As a result, the process shifts from the regeneration treatment to the hardness component discharge treatment.

### (Hardness component discharge treatment)

In the present exemplary embodiment, the hardness component discharge treatment includes a raw water separation unit washing treatment and a regenerated water replacement treatment, and the regenerated water replacement treatment is performed after the raw water separation unit washing treatment is performed.

The reason of performing the hardness component discharge treatment will be described. As the regeneration treatment proceeds, the concentration of the hardness component of the acidic electrolyzed water including the hardness component collected from water softening tank 3 gradually increases. Thus, the concentration of the hardness component of the regenerated water in water storage tank 15 increases. This increases the concentration of the hardness component of the acidic electrolyzed water sent from the electrolytic tank 12 to the water softening tank 3, and the hardness component is hardly released from weakly acidic cation exchange resin 10. Thus, the amount of the hardness component that can be collected from water softening tank 3 decreases, and thus the progress of the regeneration treatment may be delayed or the regeneration treatment may not be completed. In addition, as described in the section of the regeneration treatment, there is a possibility that the precipitate precipitated in separation unit 14 may block separation unit 14. For these reasons, it is necessary to reduce the amount of the hardness component in circulation flow path 20, and thus the hardness component discharge treatment is performed.

### ((Raw water separation unit washing treatment))

When water softening devices 1 primarily stops the regeneration treatment, water softening device 1 shifts to the raw water separation unit washing treatment. Here, the raw water separation unit washing treatment is a treatment in which raw water is passed from the downstream side of separation unit 14 and the precipitate accumulated in separation unit 14 is discharged together with the raw water. This can perform backwashing of separation unit 14.

Next, the operation of water softening device 1 at the time of the raw water separation unit washing treatment will be described with reference to the column of "RAW WATER SEPARATION UNIT WASHING" in Fig. 5.

As illustrated in Fig. 5, in the raw water separation unit washing treatment, water softening devices 1 opens on-off valve 31, on-off valve 33, on-off valve 37, and on-off valve 45, and opens on-off valve 43 and on-off valve 44 so as to be in a flow path state where water passes from separation unit 14 to drainage flow path 26. As a result, in water softening device 1, raw water separation unit washing flow path 27 is formed, and separation unit 14 can be washed. At this time, on-off valve 35, on-off valve 36, on-off valve 38, on-off valve 39, and on-off valve 42 are closed.

Specifically, in the raw water separation unit washing treatment, as illustrated in Fig. 3, the supplied raw water flows into bypass flow path 29 from inlet port 2 through flow path 7. Next, since on-off valve 33 is open and on-off valve 32 is closed, the raw water having flowed through bypass flow path 29 flows through flow path 8 and second supply flow path 23 and flows into separation unit 14. Allowing the raw water to flow into separation unit 14 causes the precipitate generated from the hardness component trapped in separation unit 14 to flow out from separation unit 14 together with the raw water.

Since on-off valve 43 and on-off valve 44 are open, the raw water including the precipitate having flowed from separation unit 14 flows through drainage flow path 26, and is discharged to the outside of the device from drainage port 16. This makes it possible to remove the precipitate captured by separation unit 14 and to wash separation unit 14. Therefore, the clogging of separation unit 14 can be eliminated through the raw water separation unit washing treatment, and the amount of water passing through separation unit 14 can improve as compared with the amount before the raw water separation unit washing treatment. To confirm the elimination of the clogging of separation unit 14, it is only required to confirm that the current value of the water pump has improved after the regeneration treatment is restarted as compared with the value before the execution of the raw water separation unit washing treatment.

The raw water separation unit washing treatment is terminated when a certain period of time (for example, five minutes) has elapsed from the start of the replacement treatment. As the certain period of time, a period of time set based on an evaluation result in a washing experiment performed in advance may be used as a period of time required for separation unit 14 to discharge the accumulated precipitate together with raw water.

When the raw water separation unit washing treatment is finished, water softening device 1 opens on-off valve 31, on-off valve 38, on-off valve 39, on-off valve 42, on-off valve 44, and on-off valve 45, closes on-off valve 32 to on-off valve 37 and on-off valve 43, and switches to the regenerated water replacement treatment in order to replace the regenerated water having a high concentration of the hardness component in water storage tank 15 with raw water.

### ((Regenerated water replacement treatment))

The regenerated water replacement treatment is a treatment for discharging regenerated water having a high concentration of hardness components and remaining in water softening device 1 to the outside of the device. In particular, since regenerated water having a high hardness component concentration remains in water storage tank 15, the regenerated water in water storage tank 15 is replaced with water having a low hardness component concentration.

Next, an operation of water softening device 1 at the time of replacing regenerated water will be described with reference to the column of "REGENERATED WATER REPLACEMENT" in Fig. 5.

As illustrated in Fig. 5, in the regenerated water replacement treatment, water softening device 1 opens on-off valve 31, on-off valve 38, the on-off valve 45, and opens on-off valve 39, on-off valve 42, and on-off valve 44 so as to be in a flow path state where water passes from water storage tank 15 to drainage flow path 26. This forms regenerated water replacement flow path 30 in water softening device 1. At this time, on-off valve 32 to on-off valve 37 and on-off valve 43 are closed.

Specifically, in the regenerated water replacement treatment, as illustrated in Fig. 4, the supplied raw water flows into bypass flow path 29 from inlet port 2 through flow path 7. Next, since on-off valve 38 is open and on-off valve 33 and on-off valve 34 are closed, the raw water having flowed through bypass flow path 29 flows through flow path 9 and second collection flow path 24 and flows into water storage tank 15. Since on-off valve 39, on-off valve 42, and on-off valve 44 are open, the raw water having flowed through water storage tank 15 flows through drainage flow path 26, and is discharged to the outside of the device from drainage port 16. This makes it possible to reduce the amount of the hardness component of the regenerated water in the regeneration treatment path, and thus, the amount of the hardness component of the regenerated water flowing into electrolytic tank 12 can be reduced when the regeneration treatment is resumed. In addition, it is possible to reduce the amount of precipitate generated by the reaction between the hardness component of the regenerated water and the hydroxide ions moved to the cathode side of electrolytic tank 12, and the flow rate of separation unit 14 tends not to decrease. Thus, the regeneration treatment of the ion exchange resin can be performed without delay, and the time required for the regeneration treatment can be shortened.

The regenerated water replacement treatment is terminated when a certain period of time (for example, two minutes) has elapsed from the start of the replacement treatment. This is a time set based on an actual design as a time required for discharging the entire water from inlet port 2 to drainage port 16 via bypass flow path 29.

When the regenerated water replacement treatment is completed, water softening device 1 closes on-off valve 31, on-off valve 32, on-off valve 34, on-off valve 44, and on-off valve 45, opens on-off valve 33, on-off valve 35 to on-off valve 39, and resumes the regeneration treatment in order to resume the regeneration treatment which has been primarily stopped.

The end of the regeneration treatment is set to a certain time (for example, two hours) excluding the time required for the hardness component discharge treatment or switching of the on-off valve from the start of the regeneration treatment. During the regeneration treatment (before the end of the regeneration treatment), the raw water separation unit washing treatment or the regenerated water replacement treatment may be performed a plurality of times. In this case, the regeneration treatment is terminated when the total time of the plurality of regeneration treatments satisfies the certain time. When the regeneration treatment is completed, water softening device 1 stops the operations of electrodes 13 and water pump 19, opens on-off valve 31 to on-off valve 34, closes on-off valve 35 to on-off valve 39 and on-off valve 42 to on-off valve 45, and shifts to the water softening treatment.

### (Water softening treatment)

The operation of water softening device 1 at the time of the water softening treatment will be described with reference to the column of "WATER SOFTENING" in Fig. 5.

In water softening device 1, as illustrated in Fig. 5, in the water softening treatment, on-off valve 34 provided in water intake port 5 is opened in a state where on-off valve 31 to on-off valve 33 are opened. As a result, in water softening device 1, since city water (raw water including hardness components) flows through water softening tank 3 and neutralization tank 4 from the outside, softened water (neutral soft water) can be taken out from water intake port 5.

Specifically, in the water softening treatment, the raw water to be supplied is supplied from inlet port 2 to water softening tank 3 through flow path 7 because of the pressure of the city water. The raw water supplied to water softening tank 3 flows through weakly acidic cation exchange resin 10 provided in water softening tank 3. At this time, cations as hardness components in the raw water are adsorbed by the action of weakly acidic cation exchange resin 10, and hydrogen ions are released (ion exchange is performed). Then, cations are removed from the raw water, whereby the raw water is softened. The softened water further passes through flow path 8 and proceeds to neutralization tank 4. In neutralization tank 4, hydrogen ions included in the softened water are adsorbed through the action of weakly basic anion exchange resin 11. That is, since the hydrogen ions are removed from the soft water after the treatment, the lowered pH increases to become neutral water softened as domestic water, and the neutral water can be taken out from water intake port 5 through flow path 9. At this time, each of on-off valve 35 to on-off valve 39 and on-off valve 42 to on-off valve 45 is in a closed state. The operations of electrodes 13 of electrolytic tank 12 and water pump 19 are also stopped.

Then, water softening device 1 stops the water softening treatment when the time zone specified by controller 17 is reached or when the water softening treatment exceeds a certain period of time, and executes the above-described regeneration treatment.

In this manner, water softening device 1 repeatedly executes the regeneration treatment, the raw water separation unit washing treatment, the regenerated water replacement treatment, and the water softening treatment.

According to water softening device 1 of the present first exemplary embodiment, the following effects can be obtained.
(1) Water softening device 1 includes water softening tank 3, neutralization tank 4, electrolytic tank 12, water pump 19, current value detector 18, and controller 17. Water softening tank 3 softens raw water including a hardness component and chloride ions with weakly acidic cation exchange resin 10 to generate soft water. Neutralization tank 4 neutralizes the pH of soft water (soft water generated by water softening tank 3) that has passed through water softening tank 3 with weakly basic anion exchange resin 11. Electrolytic tank 12 generates acidic electrolyzed water for regenerating weakly acidic cation exchange resin 10 in water softening tank 3 and alkaline electrolyzed water for regenerating weakly basic anion exchange resin 11 in neutralization tank 4. Water pump 19 supplies alkaline electrolyzed water from the electrolytic tank 12 to neutralization tank 4. Current value detector 18 detects a current value at the time of the operation of water pump 19. Based on the current value detected by current value detector 18, controller 17 controls a regeneration treatment for performing at least one of (i) regeneration of weakly acidic cation exchange resin 10 using acidic electrolyzed water and (ii) regeneration of weakly basic anion exchange resin 11 using alkaline electrolyzed water. Controller 17 continues the regeneration treatment when the current value of water pump 19 detected by current value detector 18 is more than or equal to a predetermined value at the time of the regeneration treatment. When the current value of water pump 19 detected by current value detector 18 is less than the predetermined value, controller 17 stops the regeneration treatment and shifts to a hardness component discharge treatment of discharging the hardness component in the water softening device to the outside of the water softening device.
   This makes it possible to detect a decrease in flow rate of separation unit 14 and to discharge the hardness components in circulation flow path 20 to the outside of the device. Thus, it is possible to avoid that separation unit 14 is blocked and the regeneration treatment cannot proceed, or it takes more time than necessary to complete the regeneration treatment. That is, it is possible to provide water softening device 1 capable of discharging a hardness component in the device at an appropriate timing and shortening the time required for a regeneration treatment.
(2) Water softening device 1 further includes separation unit 14. separation unit 14 is provided in a flow path communicating electrolytic tank 12 and neutralization tank 4, and separates a precipitate generated from a hardness component included in alkaline electrolyzed water introduced into electrolytic tank 12. In the raw water separation unit washing treatment, the raw water from inlet port 2 is allowed to pass from the downstream side of separation unit 14 to separation unit 14.
   This makes it possible to perform backwashing of separation unit 14 using raw water and to discharge the precipitate including the hardness component accumulated in separation unit 14 to the outside of the device together with the raw water. Thus, the pressure loss of separation unit 14 can be reduced, and a sufficient amount of alkaline electrolyzed water can be supplied to neutralization tank 4. Therefore, it is possible to provide water softening device 1 capable of performing a regeneration treatment without delay.
(3) During the regeneration treatment, water softening device 1 causes raw water to pass through water storage tank 15 and performs a regenerated water replacement treatment. The regenerated water replacement treatment is a treatment for discharging regenerated water having a high concentration of hardness components remaining in water storage tank 15 to the outside of the device.

This makes it possible to discharge regenerated water derived from acidic electrolyzed water including a large amount of hardness components released from weakly acidic cation exchange resin 10 during the regeneration treatment to the outside of the device. Thus, the amount of the hardness component of the regenerated water in the regeneration treatment path can be reduced, the hardness component of the regenerated water flowing into the electrolytic tank decreases when the next regeneration treatment is performed, and thus the precipitate generated by the reaction between the hardness component of the regenerated water and the hydroxide ions moved to the cathode side of electrolytic tank 12 also decreases. Therefore, it is possible to provide water softening device 1 capable of smoothly performing the regeneration treatment of the ion exchange resin and shortening the time required for the regeneration treatment of water softening device 1.

### (Second exemplary embodiment)

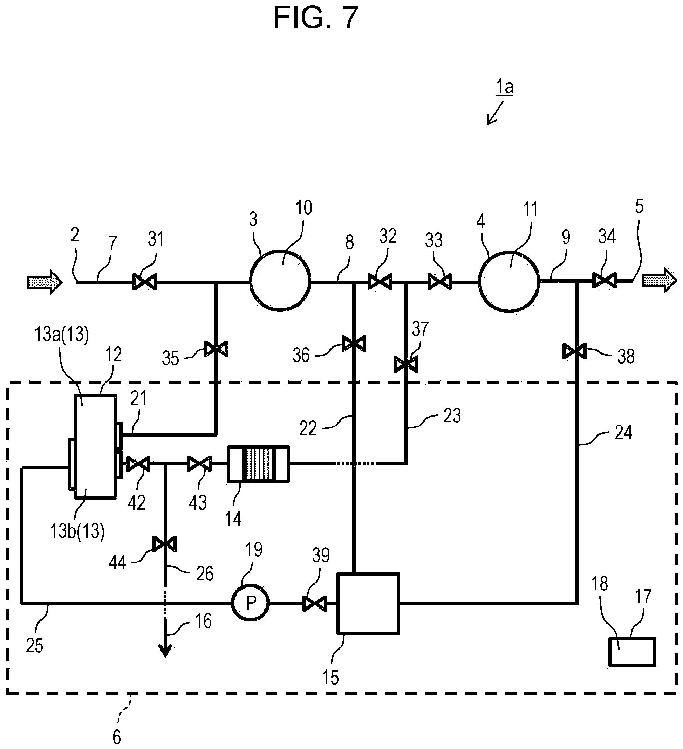

Next, water softening device 1a according to a second exemplary embodiment of the present disclosure will be described with reference to Fig. 7. Fig. 7 is a conceptual diagram illustrating a configuration of water softening device 1a according to the second exemplary embodiment.

Water softening device 1a according to the second exemplary embodiment is different from that of the water softening device in the first exemplary embodiment in that raw water is caused to pass through water softening tank 3 at the time of the hardness component discharge treatment to discharge acidic electrolyzed water having a high concentration of the hardness component remaining in water softening tank 3 to the outside of the device, and that separation unit 14 is washed using the acidic soft water having flowed through water softening tank 3. Other configurations and controls of water softening device 1a are the same as those of water softening device 1 according to the first exemplary embodiment. Hereinafter, descriptions of the matters having been already described in the first exemplary embodiment will be omitted as appropriate, and differences with respect to the first exemplary embodiment will be mainly explained.

### (Flow path)

As illustrated in Fig. 7, water softening device 1a includes a plurality of on-off valves (on-off valve 31 to on-off valve 39 and on-off valve 42 to on-off valve 44). The plurality of on-off valves (on-off valve 31 to on-off valve 39 and on-off valve 42 to on-off valve 44) are respectively provided in predetermined positions of a plurality of flow paths, and switch between an "open" state and a "closed" state in the respective flow paths. Water softening device 1a does not include a flow path corresponding to bypass flow path 29 of the first exemplary embodiment. Water softening device 1a is configured to generate acidic soft water by causing water to pass through water softening tank 3 with flow path 8 instead of bypass flow path 29 and supply the acidic soft water to separation unit 14.

Flow path 8 is connected to first collection flow path 22 and second supply flow path 23 in order from the upstream side at the time of the water softening treatment. That is, at the time of the hardness component discharge treatment, the raw water introduced from inlet port 2 flows through flow path 7, on-off valve 31, water softening tank 3, flow path 8, and on-off valve 32 in this order, and is supplied to separation unit 14 as acidic soft water.

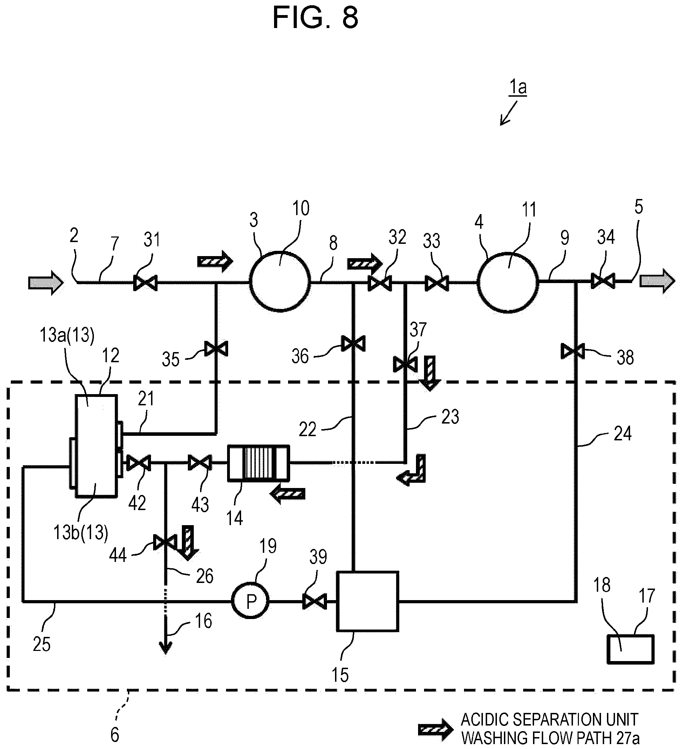

Next, acidic separation unit washing flow path 27a in water softening device 1a will be described with reference to Fig. 8. Fig. 8 is a configuration diagram illustrating acidic separation unit washing flow path 27a of water softening device 1a according to the second exemplary embodiment.

As illustrated in Fig. 8, acidic separation unit washing flow path 27a is configured by flow paths connecting inlet port 2, water softening tank 3, separation unit 14, and drainage port 16. Specifically, water softening tank 3 is communicably connected to inlet port 2 by flow path 7. Water softening tank 3 is communicably connected to separation unit 14 by flow path 8 and second supply flow path 23. Separation unit 14 is communicably connected to drainage port 16 by second supply flow path 23 and drainage flow path 26. Second supply flow path 23 is provided with separation unit 14, on-off valve 37, on-off valve 42, and on-off valve 43.

Acidic separation unit washing flow path 27a is a flow path for washing separation unit 14 with acidic soft water, and is a flow path through which water flows at the time of the acidic separation unit washing treatment. Specifically, as illustrated in Fig. 8 (hatched arrow), acidic separation unit washing flow path 27a is a flow path in which raw water introduced from inlet port 2 flows through flow path 7 and water softening tank 3 in this order, is made acidic soft water in water softening tank 3, then flows through flow path 8, second supply flow path 23, and separation unit 14 in this order, is used for washing separation unit 14, flows through on-off valve 43 and drainage flow path 26, and is discharged from drainage port 16 to the outside of the device. That is, water softening device 1a is configured to cause acidic soft water to flow from the downstream side of separation unit 14 to separation unit 14 to perform backwashing at the time of the acidic separation unit washing treatment.

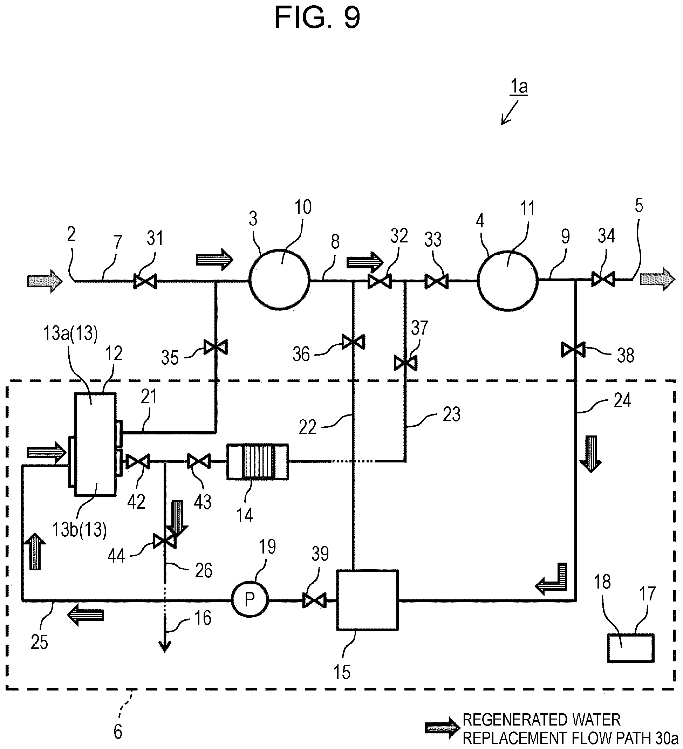

Next, regenerated water replacement flow path 30a in water softening device 1a will be described with reference to Fig. 9. Fig. 9 is a configuration diagram illustrating regenerated water replacement flow path 30a of the water softening device according to the second exemplary embodiment.

As illustrated in Fig. 9 (arrow with horizontal lines), regenerated water replacement flow path 30a is configured by respective flow paths connecting inlet port 2, water softening tank 3, neutralization tank 4, water storage tank 15, water pump 19, electrolytic tank 12, and drainage port 16. Specifically, water softening tank 3 is communicably connected to inlet port 2 by flow path 7. Water softening tank 3 is communicably connected to neutralization tank 4 by flow path 8. Neutralization tank 4 is communicably connected to water storage tank 15 by second collection flow path 24. Water storage tank 15 is communicably connected to water pump 19 and electrolytic tank 12 in this order by water supply flow path 25. Electrolytic tank 12 is communicably connected to drainage port 16 by drainage flow path 26.

Regenerated water replacement flow path 30a is a flow path for replacing water remaining in water softening tank 3, neutralization tank 4, water storage tank 15, water pump 19, and electrolytic tank 12 with raw water introduced from inlet port 2, and is a flow path through which water flows at the time of the regenerated water replacement treatment. Specifically, the flow path is a flow path in which the raw water introduced from inlet port 2 flows through flow path 7, water softening tank 3, second collection flow path 24, water storage tank 15, water pump 19, and electrolytic tank 12 in this order, then flows through on-off valve 42, on-off valve 44, and drainage flow path 26, and is discharged from drainage port 16 to the outside of the device.

### (Regeneration treatment, acidic separation unit washing treatment, regenerated water replacement treatment, and water softening treatment)

### (Regeneration treatment)

Since the operation of water softening device 1a at the time of the regeneration treatment with regeneration device 6 is the same as that of water softening device 1 according to the first exemplary embodiment, the description of the operation at the time of the regeneration treatment will be omitted. In water softening device 1a, it is possible to grasp the flow rate change after separation unit 14 by grasping the change in the current value detected by current value detector 18 during the progress of the regeneration treatment. The current value detected by current value detector 18 is used to determine the transition from the regeneration treatment to the hardness component discharge treatment by controller 17. When second current value I2 is more than or equal to a predetermined value, controller 17 continues the regeneration treatment. On the other hand, when second current value I2 is less than the predetermined value, controller 17 temporarily stops the regeneration treatment and controls water softening device 1a to shift to the hardness component discharge treatment. That is, the operations of electrodes 13 and water pump 19 are stopped, and the process shifts to the hardness component discharge treatment. In the hardness component discharge treatment described in the second exemplary embodiment, the acidic separation unit washing treatment and the regenerated water replacement treatment are sequentially performed. As the predetermined value of second current value I2, for example, a current value set based on an evaluation result in an experiment performed in advance may be used as a current value when the flow rate immediately after separation unit 14 decreases to a constant value.

### (Acidic separation unit washing treatment)

When water softening devices 1a primarily stops the regeneration treatment, water softening device 1a shifts to the acidic separation unit washing treatment. Here, the acidic separation unit washing treatment is a treatment of discharging acidic electrolyzed water having a high concentration of the hardness component remaining in water softening tank 3 to the outside of the device and passing raw water into water softening tank 3.

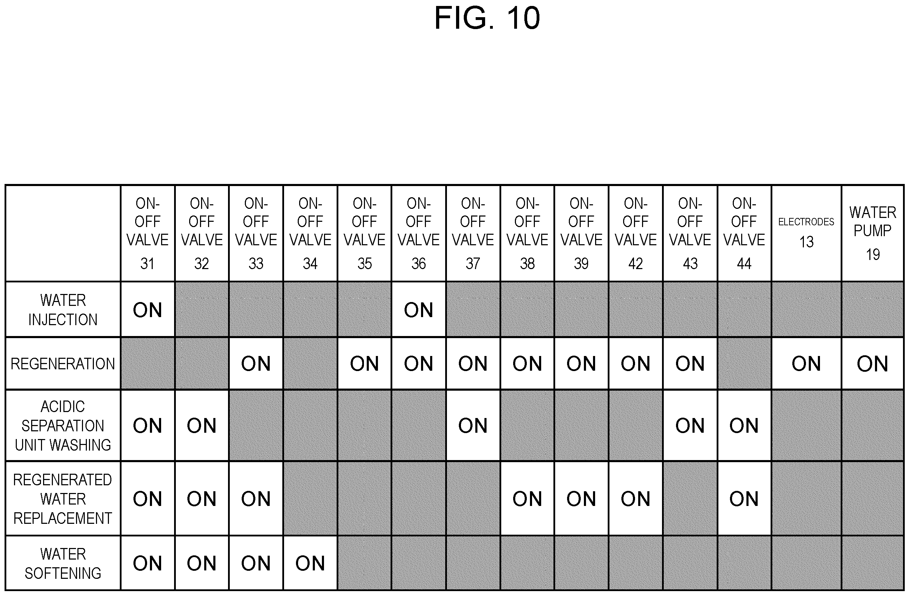

Next, the operation of water softening device 1a at the time of the acidic separation unit washing treatment will be described with reference to the column of "ACIDIC SEPARATION UNIT WASHING" in Fig. 10. Fig. 10 is a view illustrating a state at the time of the operation of water softening device 1a according to the second exemplary embodiment.

As illustrated in Fig. 10, in water softening device 1a, on-off valve 31, on-off valve 32, on-off valve 37, on-off valve 43, and on-off valve 44 are opened in the acidic separation unit washing treatment. As a result, in water softening device 1, acidic separation unit washing flow path 27a is formed, and backwashing of separation unit 14 can be performed with acidic soft water. At this time, on-off valve 33 to on-off valve 36, on-off valve 38, on-off valve 39, and on-off valve 42 are closed.

As illustrated in Fig. 8, since on-off valve 32 and on-off valve 37 are open and on-off valve 33 and on-off valve 36 are closed, the acidic soft water delivered from water softening tank 3 flows through flow path 8 and second supply flow path 23, and flows into separation unit 14 from the downstream side in the water flowing direction at the time of the regeneration treatment. Allowing the acidic soft water to flow into separation unit 14 causes the precipitate generated from the hardness component trapped in separation unit 14 to react with the acidic soft water. As a result, the precipitate generated from the hardness component is dissolved and becomes a hardness component, and is included in the acidic soft water.

Since on-off valve 43 and on-off valve 44 are open and on-off valve 42 is closed, the acidic soft water sent from separation unit 14 flows through drainage flow path 26 and is discharged to the outside of the device by drainage port 16. Thus, the precipitate accumulated in separation unit 14 is dissolved in the acidic soft water and discharged to the outside of the device together with the acidic soft water.

Then, in water softening device 1a, when the acidic separation unit washing treatment is finished, on-off valve 31 to on-off valve 33, on-off valve 38, on-off valve 39, on-off valve 42, and on-off valve 44 are opened, and on-off valve 34 to on-off valve 37, and on-off valve 43 are closed to start the regenerated water replacement treatment.

The acidic separation unit washing treatment is terminated when a certain period of time (for example, 5 minutes) has elapsed from the start of the replacement treatment. Here, the certain period of time is a period of time set as a period of time required for discharging acidic electrolyzed water having a high concentration of the hardness component remaining in water softening tank 3 to the outside of the device and dissolving a certain amount of precipitates captured by separation unit 14, based on evaluation results in a washing experiment performed in advance.

### (Regenerated water replacement treatment)

Next, an operation at the time of replacing regenerated water by water softening device 1a will be described with reference to the column of "REGENERATED WATER REPLACEMENT" in Fig. 10.

As illustrated in Fig. 10, in water softening device 1a, on-off valve 31 to on-off valve 33 are opened in the regenerated water replacement treatment. In the regenerated water replacement treatment, on-off valve 38, on-off valve 39, on-off valve 42, and on-off valve 44 are opened so as to be in a flow path state where water passes from neutralization tank 4 to drainage flow path 26 via second collection flow path. This forms regenerated water replacement flow path 30a in water softening device 1a. At this time, on-off valve 33 to on-off valve 37 and on-off valve 43 are closed.

Specifically, in the regenerated water replacement treatment, as illustrated in Fig. 9, the raw water supplied with the pressure of the city water flows into water softening tank 3 from inlet port 2 through flow path 7. Next, since on-off valve 32 and on-off valve 33 are open and on-off valve 36 and on-off valve 37 are closed, the raw water having passed through water softening tank 3 flows into neutralization tank 4. Thereafter, the water having passed through neutralization tank 4 flows through flow path 9 and second collection flow path 24, and flows into water storage tank 15. Since on-off valve 39, on-off valve 42, and on-off valve 44 are open, the raw water having flowed through water storage tank 15 flows through water pump 19, electrolytic tank 12, and drainage flow path 26, and is discharged to the outside of the device from drainage port 16. As a result, since the amount of the hardness component of the regenerated water in the regeneration treatment path is reduced, the regeneration treatment of the ion exchange resin can be performed without delay, and the time required for the regeneration treatment can be shortened.

The regenerated water treatment is terminated when a certain period of time (for example, two minutes) has elapsed from the start of the replacement treatment. Here, the certain period of time may be a time set based on an actual design as a time required to discharge all the water from inlet port 2 to drainage port 16.

When the regenerated water replacement treatment is completed, water softening device 1a closes on-off valve 31, on-off valve 32, on-off valve 34, on-off valve 44, and on-off valve 45, opens on-off valve 33, on-off valve 35 to on-off valve 39, and resumes the regeneration treatment in order to resume the regeneration treatment which has been primarily stopped.

Then, in water softening device 1, the operations of electrodes 13 and water pump 19 are stopped when the regeneration treatment is completed. The end of the regeneration treatment is set to a certain time (for example, two hours) excluding the time required for the hardness component discharge treatment or switching of the on-off valve from the start of the regeneration treatment. During the regeneration treatment (before the end of the regeneration treatment), the acidic separation unit washing treatment or the regenerated water replacement treatment may be performed a plurality of times. When the regeneration treatment is completed, the process proceeds to the water softening treatment.

### (Water softening treatment)

Since the water softening treatment is the same as the contents described in the first exemplary embodiment, the detailed description thereof is omitted.

In this manner, water softening device 1a repeatedly executes the regeneration treatment, the raw water separation unit washing treatment, the regenerated water replacement treatment, and the water softening treatment.

As described above, according to water softening device 1a of the present second exemplary embodiment, the following effects can be obtained in addition to the effect (2) obtained by the first exemplary embodiment.

(4) In water softening device 1a, as the acidic separation unit washing treatment, the raw water having flowed through water softening tank 3 is caused to flow into separation unit 14 from the downstream side of separation unit 14.

As a result, the raw water which has become acidic soft water in water softening tank 3 flows in from the downstream side of separation unit 14. Since the acidic soft water flows into separation unit 14, the precipitate including the hardness component precipitated in separation unit 14 can be dissolved and discharged. Therefore, the washing efficiency of separation unit 14 can be improved, and the process can be shifted to the regenerated water replacement treatment in a shorter period of time.

### (Third exemplary embodiment)

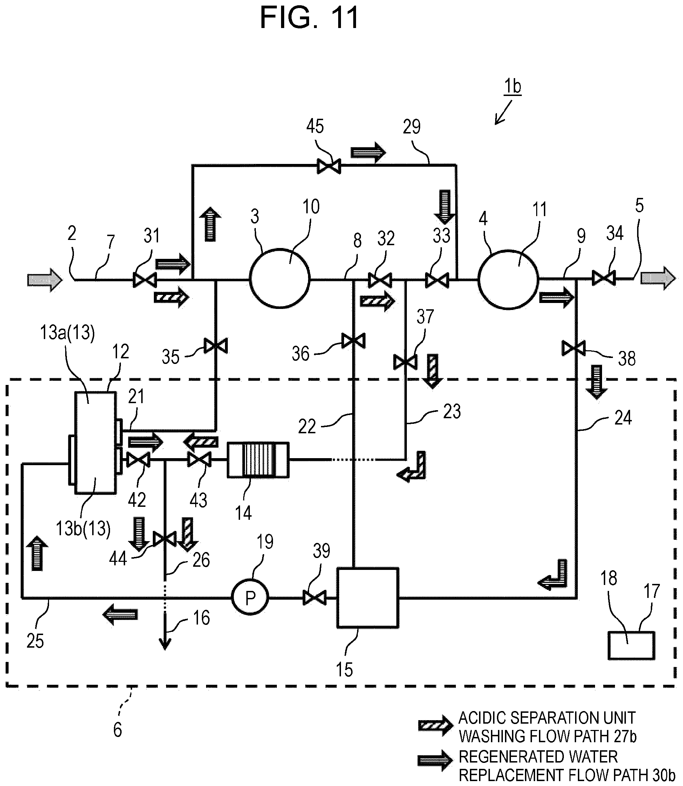

Next, water softening device 1b according to a third exemplary embodiment of the present disclosure will be described with reference to Fig. 11. Fig. 11 is a conceptual diagram illustrating a configuration of water softening device 1b and hardness component discharge flow path 27b according to the third exemplary embodiment.

Water softening device 1b according to the third exemplary embodiment is different from that of the first exemplary embodiment in that, at the time of the hardness component discharge treatment, raw water is caused to pass through water softening tank 3, regenerated water including a large amount of hardness components in water softening tank 3 and water storage tank 15 is discharged to the outside of the device, and at the same time, separation unit 14 is washed using acidic soft water having flowed through water softening tank 3. Other configurations and controls of water softening device 1b are the same as those of water softening device 1 according to the first exemplary embodiment. Hereinafter, descriptions of the matters having been already described in the first exemplary embodiment will be omitted as appropriate, and differences with respect to the first exemplary embodiment will be mainly explained.

### (Flow path)

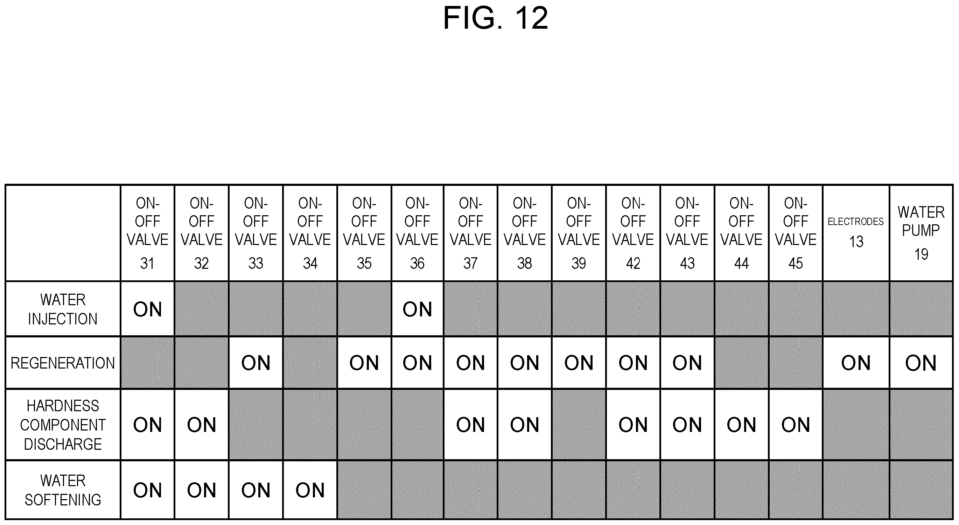

A flow path in water softening device 1b will be described with reference to Figs. 11 and 12. Fig. 12 is a diagram illustrating a state at the time of the operation of the water softening device according to the third exemplary embodiment.

As illustrated in Fig. 11, water softening device 1b includes a plurality of on-off valves (on-off valve 31 to on-off valve 39 and on-off valve 42 to on-off valve 45) in the same manner as in water softening device 1. The plurality of on-off valves (on-off valve 31 to on-off valve 39 and on-off valve 42 to on-off valve 44) are respectively provided in predetermined positions of a plurality of flow paths, and switch between an "open" state and a "closed" state in the respective flow paths.

As illustrated in Fig. 11 (hatched arrow), acidic separation unit washing flow path 27b is configured by flow paths connecting inlet port 2, water softening tank 3, separation unit 14, and drainage port 16. That is, water softening tank 3 is communicably connected to inlet port 2 by flow path 7. Water softening tank 3 is communicably connected to separation unit 14 by flow path 8 and second supply flow path 23. Separation unit 14 is communicably connected to drainage port 16 by second supply flow path 23 and drainage flow path 26. Second supply flow path 23 is provided with separation unit 14, on-off valve 37, on-off valve 42, and on-off valve 43.

Acidic separation unit washing flow path 27b is a flow path for washing separation unit 14 with acidic soft water, and is a flow path through which water flows at the time of the acidic separation unit washing treatment. Specifically, as illustrated in Fig. 11 (hatched arrow), acidic separation unit washing flow path 27a is a flow path in which raw water introduced from inlet port 2 flows through flow path 7 and water softening tank 3 in this order, is made acidic soft water in water softening tank 3, then flows through flow path 8, second supply flow path 23, and separation unit 14 in this order, is used for washing separation unit 14, flows through on-off valve 43, on-off valve 44, and drainage flow path 26, and is discharged from drainage port 16 to the outside of the device. That is, water softening device 1b is configured to cause acidic soft water to flow from the downstream side of separation unit 14 to separation unit 14 to perform backwashing at the time of the acidic separation unit washing treatment.

As illustrated in Fig. 11 (arrow with horizontal lines), regenerated water replacement flow path 30b includes flow paths connecting inlet port 2, neutralization tank 4, water storage tank 15, water pump 19, electrolytic tank 12, and drainage port 16. Specifically, neutralization tank 4 is communicatively connected to inlet port 2 by flow path 7, bypass flow path 29, and flow path 8. Neutralization tank 4 is communicably connected to water storage tank 15 by second collection flow path 24. Water storage tank 15 is communicably connected to water pump 19 and electrolytic tank 12 in this order by water supply flow path 25. Electrolytic tank 12 is communicably connected to drainage port 16 by drainage flow path 26.

As illustrated in Fig. 11 (arrow with horizontal lines), regenerated water replacement flow path 30b is a flow path through which water introduced from inlet port 2 flows in order of bypass flow path 29, neutralization tank 4, water storage tank 15, water pump 19, and electrolytic tank 12. More specifically, regenerated water replacement flow path 30b is a flow path in which raw water introduced from inlet port 2 flows through flow path 7 and bypass flow path 29 in this order, passes through neutralization tank 4, then flows through second collection flow path 24, water storage tank 15, water pump 19, and electrolytic tank 12 in this order, flows through on-off valve 42, on-off valve 44, and drainage flow path 26, and is discharged from drainage port 16 to the outside of the device.

### (Regeneration treatment, hardness component discharge treatment, and water softening treatment)

### (Regeneration treatment)

Since the operation of water softening device 1b at the time of the regeneration treatment with regeneration device 6 is the same as that of water softening device 1 according to the first exemplary embodiment, the description of the operation at the time of the regeneration treatment will be omitted. In water softening device 1b, it is possible to grasp the flow rate change after separation unit 14 by grasping the change in the current value detected by current value detector 18 during the progress of the regeneration treatment. The current value detected by current value detector 18 is used to determine the transition from the regeneration treatment to the hardness component discharge treatment by controller 17. When second current value I2 is more than or equal to a predetermined value, controller 17 continues the regeneration treatment. On the other hand, when second current value I2 is less than the predetermined value, controller 17 temporarily stops the regeneration treatment and controls water softening device 1 to shift to the hardness component discharge treatment. That is, the operations of electrodes 13 and water pump 19 are stopped, and the process shifts to the hardness component discharge treatment. In the hardness component discharge treatment described in the third exemplary embodiment, the acidic separation unit washing treatment and the regenerated water replacement treatment are performed at the same time. As the predetermined value of second current value I2, for example, a current value set based on an evaluation result in an experiment performed in advance may be used as a current value when the flow rate immediately after separation unit 14 decreases to a constant value.

### (Hardness component discharge treatment)

When water softening devices 1b primarily stops the regeneration treatment, water softening device 1b shifts to the hardness component discharge treatment. The hardness component discharge treatment described in the present exemplary embodiment is a treatment for simultaneously circulating raw water through acidic separation unit washing flow path 27b and regenerated water replacement flow path 30b. Specifically, in the hardness component discharge treatment, raw water simultaneously flows through two flow paths of acidic separation unit washing flow path 27b through which the raw water passes and the precipitate in separation unit 14 is discharged to the outside of the device together with the acidic electrolyzed water having a high concentration of the hardness component remaining in water softening tank 3, and regenerated water replacement flow path 30b through which the regenerated water in neutralization tank 4, water storage tank 15, water pump 19, and electrolytic tank 12 is replaced with the raw water and discharged to the outside of the device. This flow of water washes the separation unit 14 and lowers the hardness component concentration in water softening device 1b.

Next, the operation of water softening device 1b at the time of the hardness component discharge treatment will be described with reference to the column of "HARDNESS COMPONENT DISCHARGE" in Fig. 12.

As illustrated in Fig. 11, in water softening device 1b, on-off valve 31, on-off valve 32, on-off valve 37, on-off valve 43, and on-off valve 44 are opened in the hardness component discharge treatment. As a result, in water softening device 1, acidic separation unit washing flow path 27b is formed, and backwashing of separation unit 14 can be performed with acidic soft water. Opening on-off valve 45, on-off valve 38, on-off valve 39, on-off valve 42, and on-off valve 44 forms regenerated water replacement flow path 30b in water softening device 1b, and regenerated water having a high hardness component concentration can be replaced with raw water. At this time, on-off valve 33 to on-off valve 36 and on-off valve 39 are closed.

As illustrated in Fig. 11, in acidic separation unit washing flow path 27b, since on-off valve 32 and on-off valve 37 are open and on-off valve 33 and on-off valve 36 are closed, the acidic soft water sent from water softening tank 3 flows through flow path 8 and second supply flow path 23 and flows into separation unit 14. Allowing the acidic soft water to flow into separation unit 14 causes the precipitate generated from the hardness component trapped in separation unit 14 to react with the acidic soft water. As a result, the precipitate generated from the hardness component is dissolved and becomes a hardness component, and is included in the acidic soft water.

Since on-off valve 43 and on-off valve 44 are open, the acidic soft water sent from separation unit 14 flows through drainage flow path 26 and is discharged to the outside of the device by drainage port 16. At this time, until the acidic soft water reaches separation unit 14, the acidic electrolyzed water having a high concentration of the hardness component remaining in water softening tank 3 during the regeneration treatment first flows into separation unit 14, and is discharged from drainage port 16 to the outside of the device.

In regenerated water replacement flow path 30b, the supplied raw water flows into bypass flow path 29 from inlet port 2 through flow path 7. Next, since on-off valve 38 is open and on-off valve 33 and on-off valve 34 are closed, the raw water having flowed through bypass flow path 29 flows through flow path 9 and second collection flow path 24 and flows into water storage tank 15. Since on-off valve 39, on-off valve 42, and on-off valve 44 are open, the raw water having flowed through water storage tank 15 flows through drainage flow path 26, and is discharged to the outside of the device from drainage port 16. As a result, since the amount of the hardness component of the regenerated water in the regeneration treatment path is reduced, the regeneration treatment of the ion exchange resin can be performed without delay, and the time required for the regeneration treatment can be shortened.

When the hardness component discharge treatment ends, the water softening device 1b closes on-off valve 31, on-off valve 32, on-off valve 34, on-off valve 44, and on-off valve 45, and opens on-off valve 33, on-off valve 35 to on-off valve 39 to resume the regeneration treatment that has been primarily stopped.

The hardness component discharge treatment is terminated when a certain period of time (for example, 5 minutes) has elapsed from the start of the hardness component discharge treatment. Here, the certain period of time is the maximum value of the time required for discharging the hardness component in acidic separation unit washing flow path 27b or regenerated water replacement flow path 30b. As the time required for discharging the hardness component in acidic separation unit washing flow path 27b, the time set based on the evaluation result in the washing experiment performed in advance can be used as the time required for discharging the acidic electrolyzed water having a high concentration of the hardness component remaining in water softening tank 3 to the outside of the device and dissolving a certain amount of the precipitate captured by separation unit 14. As the time required for discharging the hardness component in regenerated water replacement flow path 30b, a time set based on an actual design can be used as the time required for discharging all the water from inlet port 2 to drainage port 16 via bypass flow path 29.

In water softening device 1b, the operations of electrodes 13 and water pump 19 are stopped when the regeneration treatment is completed. The end of the regeneration treatment is set to a certain time (for example, two hours) excluding the time required for the hardness component discharge treatment or switching of the on-off valve from the start of the regeneration treatment. During the regeneration treatment (until the regeneration treatment is completed), the hardness component discharge treatment may be performed a plurality of times. When the regeneration treatment is completed, the process proceeds to the water softening treatment.

### (Water softening treatment)

Since the water softening treatment is the same as the contents described in the first exemplary embodiment, the detailed description thereof is omitted.

In this manner, in water softening device 1b, the regeneration treatment, the hardness component discharge treatment, and the water softening treatment are repeatedly executed.

Water softening device 1b according to the present third embodiment can obtain the following effects in addition to the effects (1) to (3) obtained by the first exemplary embodiment.

(5) In water softening device 1b, it is possible to execute a hardness component discharge treatment in which an acidic separation unit washing treatment of discharging hardness components in separation unit 14 and water softening tank 3 and a regenerated water replacement treatment of discharging hardness components in neutralization tank 4, water storage tank 15, water pump 19, and electrolytic tank 12 are performed in parallel.

This makes it possible to wash separation unit 14 and simultaneously discharge the regenerated water in the flow path to the outside of water softening device 1b. Thus, the amount of the hardness component of the precipitate derived from the hardness component and the amount of the hardness component of the regenerated water in the regeneration treatment path can be reduced in a short time, and thus the regeneration treatment of the ion exchange resin can be performed without delay, and the time required for the regeneration treatment of water softening device 1b can be further shortened.

The present disclosure has been described above based on the exemplary embodiments. It is understood by those skilled in the art that these exemplary embodiments are merely examples, that the components or the treatment processes of those can be combined as various modifications, and that such modifications also fall within the scope of the present disclosure.

In the water softening device (1, 1a, 1b) according to each of the above-described exemplary embodiments, water storage tank 15 is provided, and acidic electrolyzed water and alkaline electrolyzed water are mixed, but the present disclosure is not limited to this configuration. For example, the flow path may be divided in such a manner that the acidic electrolyzed water and the alkaline electrolyzed water are not mixed. In this case, a water storage tank may be provided in each flow path. This configuration makes it possible to secure the amount of water at the time of regeneration in each flow path.

The water softening device (1, 1a, 1b) according to each of the above-described exemplary embodiments is configured to include one water softening tank 3 and one neutralization tank 4, but the present disclosure is not limited to this configuration. For example, two water softening tanks and two neutralization tanks may be provided, and water may pass through the first water softening tank, the first neutralization tank, the second water softening tank, and the second neutralization tank in this order at the time of the water softening treatment. This makes it possible to alternately perform water softening and neutralization at the time of water softening treatment and to improve water softening performance.

In the water softening device (1, 1a, 1b) according to each of the above-described exemplary embodiments, water pump 19 is provided to mix the acidic electrolyzed water and the alkaline electrolyzed water and supply the mixed water to the electrolytic tank 12, but the present disclosure is not limited to this configuration. For example, a flow path may be provided in such a manner that acidic electrolyzed water and alkaline electrolyzed water are not mixed, and water may be supplied through each flow path. In this case, to prevent mixing of acidic electrolyzed water and alkaline electrolyzed water in electrolytic tank 12, a partition wall through which ions can pass is provided in electrolytic tank 12. As a specific water supply method, in the flow path through which the acidic electrolyzed water flows, the acidic electrolyzed water sent out from the acidic electrolyzed water-side outlet of electrolytic tank 12 flows through water softening tank 3 and the water pump, and flows into electrolytic tank 12 from the acidic electrolyzed water-side inlet provided in electrolytic tank 12. In the flow path through which the alkaline electrolyzed water flows, the alkaline electrolyzed water sent from the alkaline electrolyzed water-side outlet of the electrolytic tank 12 flows through separation unit 14, neutralization tank 4, and water pump, and flows into electrolytic tank 12 from the alkaline electrolyzed water-side inlet provided in the electrolytic tank 12. In this case, by providing water pumps in the respective flow paths, flow rates at the time of regeneration may be detected by the current values of the water pumps and controlled in the respective flow paths. In this case as well, the regeneration treatment and the hardness component discharge treatment can be performed according to the current value of the water pump.

In the water softening device (1, 1a, 1b) according to each of the above-described exemplary embodiments, controller 17 includes current value detector 18, but the present disclosure is not limited to this configuration. For example, current value detector 18 may be provided in water pump 19, or may be provided separately from controller 17 and water pump 19. In any case, current value detector 18 may be provided so that the current value of water pump 19 can be detected and the operating state of water softening device 1 can be controlled by controller 17 based on the detected current value. In this case as well, the regeneration treatment and the hardness component discharge treatment can be performed according to the current value of water pump 19.

### INDUSTRIAL APPLICABILITY

The water softening device according to the present disclosure can be applied to a point-of-use (POU) water purification system or a point-of-entry (POE) water purification system.

### REFERENCE MARKS IN THE DRAWINGS

- 1: water softening device
- 1a: water softening device
- 1b: water softening device
- 2: inlet port
- 3: water softening tank
- 4: neutralization tank
- 5: water intake port
- 6: regeneration device
- 7: flow path
- 8: flow path
- 9: flow path
- 10: weakly acidic cation exchange resin
- 11: weakly basic anion exchange resin
- 12: electrolytic tank
- 13: electrodes
- 13a: electrode
- 13b: electrode
- 14: separation unit
- 15: water storage tank
- 16: drainage port
- 17: controller
- 18: current value detector
- 19: water pump
- 20: circulation flow path
- 20a: first circulation flow path
- 20b: second circulation flow path
- 21: first supply flow path
- 22: first collection flow path
- 23: second supply flow path
- 24: second collection flow path
- 25: water supply flow path
- 26: drainage flow path
- 27: raw water separation unit washing flow path
- 27a: acidic separation unit washing flow path
- 27b: acidic separation unit washing flow path
- 29: bypass flow path
- 30: regenerated water replacement flow path
- 30a: regenerated water replacement flow path
- 30b: regenerated water replacement flow path
- 31: on-off valve
- 32: on-off valve
- 33: on-off valve
- 34: on-off valve
- 35: on-off valve
- 36: on-off valve
- 37: on-off valve
- 38: on-off valve
- 39: on-off valve
- 42: on-off valve
- 43: on-off valve
- 44: on-off valve
- 45: on-off valve

## Claims

1. A water softening device comprising:
a water softening tank that softens raw water including a hardness component with a weakly acidic cation exchange resin to produce soft water;
a neutralization tank that neutralizes a pH of the soft water generated by the water softening tank with a weakly basic anion exchange resin;
an electrolytic tank that generates acidic electrolyzed water for regenerating the weakly acidic cation exchange resin in the water softening tank and alkaline electrolyzed water for regenerating the weakly basic anion exchange resin in the neutralization tank;
a water pump that supplies the alkaline electrolyzed water from the electrolytic tank to the neutralization tank;
a current value detector that detects a current value of the water pump; and
a controller that controls a regeneration treatment of performing, based on the current value detected by the current value detector, at least one of (i) regeneration of the weakly acidic cation exchange resin using the acidic electrolyzed water and (ii) regeneration of the weakly basic anion exchange resin using the alkaline electrolyzed water,
wherein the controller, in the regeneration treatment,
continues the regeneration treatment when the current value of the water pump detected by the current value detector is more than or equal to a predetermined value, and
stops the regeneration treatment and shifts to a hardness component discharge treatment of discharging the hardness component in the water softening device to an outside of the water softening device when the current value of the water pump detected by the current value detector is less than the predetermined value.

2. The water softening device according to Claim 1, the water softening device further comprising a separation unit provided in a flow path communicating the electrolytic tank and the neutralization tank, the separation unit separating a precipitate generated from the hardness component included in the alkaline electrolyzed water introduced into the electrolytic tank,
wherein the controller performs, as the hardness component discharge treatment, a raw water separation unit washing treatment of allowing the raw water to flow into the separation unit from a downstream side of the separation unit.

3. The water softening device according to Claim 1, the water softening device further comprising a separation unit provided in a flow path communicating the electrolytic tank and the neutralization tank, the separation unit separating a precipitate generated from the hardness component included in the alkaline electrolyzed water introduced into the electrolytic tank,
wherein the controller performs, as the hardness component discharge treatment, an acidic separation unit washing treatment of allowing the raw water to pass through the water softening tank to generate the acidic soft water and allowing the acidic soft water to flow into the separation unit from a downstream side of the separation unit.

4. The water softening device according to Claim 1, the water softening device further comprising a separation unit provided in a flow path communicating the electrolytic tank and the neutralization tank, the separation unit separating a precipitate generated from the hardness component included in the alkaline electrolyzed water introduced into the electrolytic tank,
wherein the controller performs, as the hardness component discharge treatment, a regenerated water replacement treatment of replacing water in a circulation flow path formed in the regeneration treatment with the raw water.

5. The water softening device according to Claim 2, wherein the controller shifts to, after the raw water separation unit washing treatment, a regenerated water replacement treatment of replacing water in a circulation flow path formed in the regeneration treatment with the raw water.

6. The water softening device according to Claim 3, wherein the controller shifts to, after the acidic separation unit washing treatment, a regenerated water replacement treatment of replacing water in a circulation flow path formed in the regeneration treatment with the raw water.

7. The water softening device according to Claim 3, wherein
the controller performs, in parallel, as the hardness component discharge treatment:
the acidic separation unit washing treatment; and
a regenerated water replacement treatment of replacing water in a circulation flow path formed in the regeneration treatment with the raw water.
